# EUROPÄISCHE PATENTSCHRIFT

(11) **EP 3 215 750 B1**
(45) Veröffentlichungstag und Bekanntmachung des Hinweises auf die Patenterteilung: **31.10.2018**
(21) Anmeldenummer: 15828635.1
(22) Anmeldetag: 30.10.2015
(51) Int. Cl.: F16B 39/04, F16B 39/08, F16B 39/12, F16B 39/282

(54) **SICHERUNGSELEMENT UND SICHERUNGSSYSTEM**
SECURING ELEMENT AND SECURING SYSTEM
ÉLÉMENT DE FIXATION ET SYSTÈME DE FIXATION

(30) Priorität: 06.11.2014 DE 102014116227
(43) Veröffentlichungstag der Anmeldung: 13.09.2017
(73) Patentinhaber: Zollmann GmbH, 72393 Burladingen (DE)
(72) Erfinder: ZOLLMANN, Martin, 72393 Burladingen (DE)
(74) Vertreter: Jakelski & Althoff Patentanwälte PartG mbB
(86) Internationale Anmeldenummer: PCT/DE2015/100456
(87) Internationale Veröffentlichungsnummer: WO 2016/070867

(56) Entgegenhaltungen:
- EP-A1- 2 400 169
- US-A- 1 701 511
- US-A- 5 391 032

## Beschreibung

Die vorliegende Erfindung betrifft ein Sicherungselement und ein Sicherungssystem für eine Verbindung von zwei Bauteilen, insbesondere für eine Schraubverbindung, sowie bevorzugte Verwendungen dieses Sicherungssystems.

### Stand der Technik

In allen Bereichen des Maschinenbaus werden Schraubverbindungen verwendet. Beispielsweise werden die Räder oder Felgen eines Kraftfahrzeugs in der Regel mit mehreren Radmuttern oder Radschrauben an einem Radträger befestigt. Es sind auch Zentralverschlüsse mit nur einer zentralen Mutter für Kraftfahrzeugräder bekannt, die vornehmlich bei Sportwagen und im Motorsport zum Einsatz kommen. Problematisch bei Schraubverbindungen, die insbesondere im Zusammenhang mit rotierenden Bauteilen zum Einsatz kommen, ist es, dass sich der Gewindeverschluss insbesondere bei längeren Laufzeiten lösen kann. Beispielsweise im Zusammenhang mit Kraftfahrzeugrädern stellt dies ein erhebliches Sicherheitsrisiko dar.

Im Hinblick auf diese Problematik kommen beispielsweise im Kraftfahrzeugbau sogenannte Dehnschrauben zum Einsatz. Nach der Montage findet hierbei durch eine plastische Verformung der Dehnschraube ein sogenanntes Setzen in der Schraubverbindung statt, so dass eine solche Verschraubung in der Regel ohne eine zusätzliche Verdrehsicherung eingesetzt wird. Nach einer Demontage einer solchen Schraubverbindung ist eine Dehnschraube in der Regel nicht mehr wiederverwendbar.

Die deutsche Patentanmeldungsschrift DE 42 05 579 A1 beschreibt eine Halteschraube zur Sicherung eines Zentralverschlusses. Hierbei wird die Radscheibe eines Kraftfahrzeugrades mit einer Zentralmutter als Zentralverschlusselement an einem Nabenadapter aufgeschraubt. Ein Mittelschaft des Nabenadapters ist mit einem Innengewinde versehen, in das die Halteschraube eingeschraubt werden kann, um so die Zentralmutter zu sichern.

Aus der deutschen Offenlegungsschrift DE 10 2011 051 980 A1 geht ein Radzentralverschluss hervor, bei dem das Rad auf einer Nabe befestigt wird, indem eine Zentralmutter auf ein Außengewinde der Nabe geschraubt wird. Auch hier ist ein Sicherungselement vorgesehen, das in ein Innengewinde der Nabe geschraubt wird und dessen Kopfbereich die Zentralmutter überdeckt, so dass dieses Sicherungselement zugleich auch als Diebstahlsicherung dienen kann.

Die deutsche Offenlegungsschrift DE 10 2011 115 534 A1 befasst sich mit einem Befestigungssystem für die Radnabe eines Kraftfahrzeugs. Die Radnabe weist einen Grundkörper und einen Aufsatz auf, wobei der Aufsatz über ein Außengewinde für eine Mutter verfügt.

Aus der deutschen Gebrauchsmusterschrift DE 93 13 244 U1 geht ein Einheitsradsystem für Straßenfahrzeuge hervor. Hierbei ist eine Radfelge mit einem Nabenadapter vorgesehen, der mittels einer Verschraubung und eines Zentrierelements an der Fahrzeugachsnabe oder der Bremsscheibe odertrommel anbringbar ist. Der Nabenadapter weist einen sich durch die Radfelge erstreckenden, zylindrischen Teil mit einem Gewinde auf, auf das zur Befestigung der Radfelge an dem Nabenadapter eine Zentralverschlussmutter aufschraubbar ist.

Die deutsche Offenlegungsschrift DE 101 06 140 A1 hat ein Montagewerkzeug für Zentralverschlüsse zum Befestigen von Rädern an einem Kraftfahrzeug zum Gegenstand. Der Zentralverschluss umfasst hierbei einen über einen Teil seiner Länge hin mit einem Außengewinde versehenen Achszapfen und eine auf diesen aufschraubbare Radmutter. Der Radmutter ist eine Schraubensicherung zugeordnet, die entgegen einer Federlast ausrückbare Sperrmittel aufweist.

Die deutsche Offenlegungsschrift DE 10 2013 002 443 A1 beschreibt ein Zentralverschlusselement für die Befestigung eines Bauteils auf einem Träger. Das Zentralverschlusselement ist auf den Träger aufschraubbar, wobei das Zentralverschlusselement Formschlussmittel zum Eingreifen eines Werkzeugs zur Betätigung des Zentralverschlusselementes aufweist.

Die Europäische Patentanmeldung EP 2 400 169 A1 betrifft eine Verbindungsvorrichtung, die einen Gewindebolzen mit einem Gewinde und eine auf das Gewinde aufschraubbare Mutter umfasst. Die Mutter weist einen Bördelkragen auf, der eine Scheibe aufnimmt. Der Gewindebolzen weist an seinem freien Ende dem Gewinde vorgelagert eine Bolzenverzahnung auf, in die eine an dem Innendurchmesser der Scheibe angeordnete Innenverzahnung eingreift. Die Scheibe weist an ihrem Außendurchmesser eine Außenverzahnung auf, die in eine an der Innenwandung des Bördelkragens angeordnete Kragenverzahnung eingreift. Die Außenverzahnung der Scheibe wirkt mit der Kragenverzahnung des Bördelkragens derart zusammen, dass eine Drehung des Bördelkragens relativ zur Scheibe nur in Anzugsrichtung der Mutter ermöglicht ist.

Das US-Patent US 1,701,511 befasst sich mit einem Sicherungselement für eine Schraubverbindung. Auf unterschiedlichen Ebenen des Sicherungselements laufen zwei Profilierungen mit einer unterschiedlichen Anzahl von Zähnen um.

Im US-Patent US 5,391,032 wird eine wiederverwendbare formschlüssige Verriegelungsvorrichtung mit einer auf einen Bolzenschaft aufgeschraubten Mutter beschrieben. Ein Verriegelungselement wird auf den Bolzenschaft gegen die Mutter aufgeschraubt. Weiterhin wird über das Ende des Bolzenschaftes ein ummanteltes Kronenelement auf den Bolzenschaft aufgeschraubt.

Trotz dieser Ansätze zur Ausbildung von Sicherungselementen ist die langfristige und zuverlässige Sicherung von Schraubverbindungen nur unzureichend gelöst. Der vorliegenden Erfindung liegt daher die Aufgabe zugrunde, ein verbessertes Sicherungselement und ein verbessertes Sicherungssystem für die Sicherung von Schraubverbindungen bereitzustellen.

### Offenbarung der Erfindung

### Vorteile der Erfindung

Diese Aufgabe wird durch ein Sicherungselement und ein Sicherungssystem gelöst, wie es sich aus den unabhängigen Ansprüchen ergibt. Bevorzugte Ausgestaltungen dieses Sicherungselementes sowie des Sicherungssystems sind Gegenstand der abhängigen Ansprüche.

Das erfindungsgemäße Sicherungselement ist dadurch gekennzeichnet, dass das Sicherungselement ringförmig ist. Das Sicherungselement weist eine außen umlaufende Außenprofilierung und eine innen umlaufende Innenprofilierung auf. Sowohl die Außenprofilierung als auch die Innenprofilierung werden jeweils von einer Mehrzahl von Profilierungseinheiten (PFE) gebildet. Erfindungsgemäß entspricht die Anzahl der Profilierungseinheiten der Außenprofilierung und die Anzahl der Profilierungseinheiten der Innenprofilierung der Anzahl von Teilstrichen bei unterschiedlichen Maßstäben gemäß dem Nonius-Prinzip, wobei sich die Anzahl der Profilierungseinheiten der Außenprofilierung und die Anzahl der Profilierungseinheiten der Innenprofilierung um mindestens 1 voneinander unterscheiden. Das Nonius-Prinzip wird dabei so realisiert, dass die unterschiedlichen Anzahlen von Profilierungseinheiten jeweils gleichmäßig auf dem Kreisumfang verteilt werden. Dabei stehen sich an genau einer Position auf dem Umfang des Sicherungselements exakt eine Profilierungseinheit der Außenprofilierung und exakt eine Profilierungseinheit der Innenprofilierung genau gegenüber.

Das erfindungsgemäße Sicherungselement ist insbesondere im Zusammenhang mit einem Sicherungssystem zu verwenden, das außer dem Sicherungselement ein erstes Bauteil oder eine erste Bauteilanordnung mit einem ersten Gewinde, insbesondere einem Außengewinde, und ein zweites Bauteil oder eine zweite Bauteilanordnung mit einem zweiten Gewinde, insbesondere einem Innengewinde, umfasst. Die Schraubverbindung zwischen dem ersten Gewinde und dem zweiten Gewinde wird durch das erfindungsgemäße Sicherungselement gesichert. Das erste Bauteil oder die erste Bauteilanordnung weist hierfür einen Bereich mit einer außen umlaufenden Profilierung und das zweite Bauteil oder die zweite Bauteilanordnung einen Bereich mit einer innen umlaufenden Profilierung auf, wobei im zusammengeschraubten Zustand zwischen der Profilierung des ersten Bauteils oder der ersten Bauteilanordnung und der Profilierung des zweiten Bauteils oder der zweiten Bauteilanordnung ein ringförmiger Sicherungsspalt gebildet wird, der von außen zugänglich ist. Hierfür ist der Außenumfang des ersten Bauteils oder der ersten Bauteilanordnung im Bereich mit der außen umlaufenden Profilierung zweckmäßigerweise kleiner gewählt als der Außenumfang des Bereichs mit dem ersten Gewinde, insbesondere dem Außengewinde. Das erfindungsgemäße Sicherungselement ist zur Anordnung (Einfügung) innerhalb des ringförmigen Sicherungsspaltes zwischen dem ersten und dem zweiten Bauteil (bzw. Bauteilanordnung) vorgesehen. Das erfindungsgemäße Sicherungselement kann jedoch nicht nur für die Sicherung einer Schraubverbindung zwischen zwei Bauteilen (oder Bauteilanordnungen), sondern auch für andere Arten der Verbindung von zwei Bauteilen eingesetzt werden, beispielsweise für die Sicherung einer Steckverbindung.

Der Ausdruck "Bauteilanordnung" ist so zu verstehen, dass das entsprechende Bauteil mehrteilig aufgebaut sein kann. Wenn im Folgenden auf das erste Bauteil oder das zweite Bauteil Bezug genommen wird, kann hierunter jeweils auch die erste Bauteilanordnung bzw. die zweite Bauteilanordnung verstanden werden.

Die Profilierungen sind zweckmäßigerweise so ausgestaltet, dass die außen umlaufende Profilierung des ersten Bauteils eine Anzahl von Profilierungseinheiten (PFE) aufweist, die der Anzahl der PFE der Innenprofilierung des Sicherungsringes in komplementärer Weise entspricht. Die innen umlaufende Profilierung des zweiten Bauteils weist zweckmäßigerweise eine Anzahl von PFE auf, die der Anzahl der PFE der Außenprofilierung des Sicherungselementes in komplementärer Weise entspricht. Daraus folgt, dass die Anzahl der PFE der Außenprofilierung des ersten Bauteils und die Anzahl der PFE der Innenprofilierung des zweiten Bauteils unterschiedlich sind, wobei sich die Anzahlen um mindestens 1 und vorzugsweise um genau 1 unterscheiden. Je nach Positionierung des zweiten Bauteils in Bezug zum ersten Bauteil bildet sich im verschraubten Zustand die Geometrie bzw. die konkrete Form des zwischen diesen Profilierungen ausgebildeten Sicherungsspaltes unterschiedlich aus. Das heißt, dass die Position der Außenprofilierung im Verhältnis zur Innenprofilierung je nachdem, wie fest oder weniger fest das Schraubgewinde angezogen wird, unterschiedlich und nicht fest vorgegeben ist. Die Geometrie des zwischen den Profilierungen gebildeten Sicherungsspaltes ist gewissermaßen variabel und in der Regel nicht vorhersagbar. Für die Montage des Sicherungselementes wird das Sicherungselement in den Sicherungsspalt eingeführt, wobei das Sicherungselement so lange angesetzt, gedreht und wieder angesetzt wird, bis es passgenau einrastet. Dieses Drehen bis zur passgenauen Einrastung ist erforderlich, da durch die nicht im Einzelnen vorhersagbare Geometrie des ausgebildeten Sicherungsspaltes das Sicherungselement an einer Position tatsächlich passgenau einrastet. Wenn das Sicherungselement passgenau in den Sicherungsspalt eingerastet ist, ist die Schraubverbindung (oder gegebenenfalls eine andere Verbindung) zwischen dem ersten und dem zweiten Bauteil arretiert, so dass es nicht mehr zu einer Lockerung der Verbindung, die beispielsweise durch Erschütterungen ausgelöst werden könnte, kommen kann.

Der überraschende Effekt des erfindungsgemäßen Sicherungselementes bei der Arretierung der Verbindung zwischen den beiden Bauteilen lässt sich mit dem Nonius-Prinzip erklären. Die bekannteste Anwendung des Nonius-Prinzips ist ein Messschieber, bei dem zwei Messskalen mit unterschiedlichem Maßstab bzw. mit unterschiedlichen Längeneinheiten übereinander gelegt sind. Bei entsprechender Wahl der Maßstäbe lässt sich eine zu messende Länge sehr genau bestimmen, wobei für eine Feinbestimmung das Aufeinandertreffen von zwei Teilstrichen der unterschiedlichen Maßstäbe betrachtet wird. In entsprechender Weise werden die Außen- und die Innenseite des Sicherungsspalts des erfindungsgemäßen Sicherungssystems mit einer unterschiedlichen Anzahl von PFE gebildet. Die Anzahlen der PFE entsprechen dabei den unterschiedlichen Maßstäben oder Längeneinheiten gemäß dem Nonius-Prinzip. Nur an einer bestimmten Position innerhalb des Sicherungsspalts stehen sich einzelne PFE des Sicherungsspalts genau gegenüber. Diese Position ist für das passgenaue Einrasten des Sicherungselementes verantwortlich.

Im Folgenden wird das Nonius-Prinzip und seine Anwendung für die vorliegende Erfindung noch näher erläutert. Bei der bekannten Anwendung des Nonius-Prinzips für den Messschieber ist eine feste Hauptskala (der sogenannte Limbus) und eine zu verschiebende Unterskala (der sogenannte Nonius) zur Ablesung von Nachkommastellen vorgesehen. Mit Hilfe der Unterskala lassen sich Streckenlängen ablesen, die kleiner als die feinste Unterteilung der Hauptskala sind. Die Längeneinheiten des Nonius sind gegenüber den Längeneinheiten des Limbus verkürzt. Die Messung mit einem solchen Messschieber nutzt dabei aus, dass es exakt einen Teilstrich auf dem Nonius gibt, welcher einem Teilstrich auf dem Limbus, also der Hauptskala, genau gegenüberliegt. Eine weitere Anwendung des Nonius-Prinzips ist der sogenannte Noniusverbinder. Hierbei handelt es sich um ein Teil aus der Montagetechnik, bei dem zwei Stäbe mit unterschiedlichen Anzahlen von Lochungen versehen sind. Die Lochungen entsprechen dabei den unterschiedlichen Skalen gemäß dem Nonius-Prinzip, wobei je nach Ausrichtung der Stäbe zueinander bestimmte Lochungen übereinanderstehen und mit Schrauben oder ähnlichem miteinander verbunden werden können.

Bei der vorliegenden Erfindung werden die unterschiedlichen Skalen gemäß dem Nonius-Prinzip für das ringförmige Sicherungselement genutzt, bei dem die unterschiedlichen Skalen als Profilierungen auf zwei verschiedenen, konzentrischen Kreisumfängen mit verschiedenem Durchmesser angeordnet werden. Hierbei werden für die erste Profilierung (außen) und für die zweite Profilierung (innen) auf dem Kreisumfang (360°) des Sicherungselements eine Mehrzahl von Profilierungseinheiten, z.B. Wellen, gleichmäßig verteilt, wobei sich die Anzahl der Profilierungseinheiten der ersten umlaufenden Profilierung (Außenprofilierung) und die Anzahl der Profilierungseinheiten der zweiten umlaufenden Profilierung (Innenprofilierung) um mindestens 1 und vorzugsweise um genau 1 unterscheiden. Wenn beispielsweise bei der Außenprofilierung 18 Wellen auf dem Kreisumfang verteilt werden (Abstand jeweils 20,00°) werden bei der Innenprofilierung 17 Wellen auf dem Kreisumfang verteilt (Abstand 21,18°). Wenn man sich vorstellt, dass diese Wellen durchnummeriert werden, würden sich die Wellen beispielsweise an der ersten Position genau gegenüberstehen. Alle übrigen Wellen sind mehr oder weniger gegeneinander verschoben. Die Außenprofilierung in diesem Beispiel wäre als Nonius (kleinerer Abstand zwischen den Wellen) und die Innenprofilierung als Limbus (größerer Abstand zwischen den Wellen) zu bezeichnen. Die Bauteile, die mit diesem Sicherungselement in Ihrer Verbindung (z.B. Schraubverbindung) zueinander zu arretieren sind, weisen jeweils eine gegengleiche, entsprechende Profilierung auf. Wenn beispielsweise eine Spannmutter auf einem Bolzen (z.B. Radnabe) oder ähnlichem zu befestigen wäre, würde die Spannmutter eine innen umlaufende Profilierung mit 18 gegengleichen Wellen aufweisen, die dem Nonius des Sicherungselements entsprechen. Die Radnabe würde eine außen umlaufende Profilierung mit 17 Wellen aufweisen, die dem Limbus des Sicherungselements in gegengleicher Weise entsprechen. Wenn nun die Spannmutter auf die Radnabe z.B. mit einem Drehmomentschlüssel aufgeschraubt wird, kommen die 18 Wellen der innen umlaufenden Profilierung der Spannmutter und die 17 Wellen der außen umlaufenden Profilierung der Radnabe durch die Drehmomentabschaltung in einer nicht vorhersehbaren Position zueinander "zum Stehen", wobei im Prinzip immer exakt ein Wellenpaar bzw. ein Paar von Profilierungseinheiten an einer nicht vorhersehbaren Stelle sich genau gegenüber steht (koinzidiert), vergleichbar mit dem oben erwähnten Messschieber. Da auch bei dem Sicherungselement erfindungsgemäß genau ein Paar von Profilierungseinheiten sich gegenüber steht, kann das Sicherungselement an dieser Position entsprechend eingesetzt werden und rastet dann ein, wodurch die Verbindung beider Bauteile gesichert ist und sich nicht mehr verschieben kann. Die passende Position des Sicherungselements wird in der Praxis dadurch gefunden, dass das Sicherungselement solange angesetzt, gedreht und wieder angesetzt wird, bis es passt. In der Praxis hat sich erwiesen, dass es tatsächlich immer eine Position gibt, in der das Sicherungselement sich einschieben lässt und einrastet. Dieser überraschende Effekt des erfindungsgemäßen Sicherungselements beruht also auf dem Nonius-Prinzip und wird dadurch realisiert, dass sich die Anzahl der Profilierung innen und außen um mindestens 1 unterscheidet, wobei eine Profilierungseinheit innen und eine Profilierungseinheit außen sich genau gegenüberstehen. Das System ist im Hinblick auf die Feinjustierungsmöglichkeiten nicht beschränkt und in der Praxis stufenlos einstellbar. Durch eine Erhöhung der Anzahl der Profilierungen können die Feinjustierungsmöglichkeiten im Prinzip bis unendlich getrieben werden, wobei hierbei in der Regel praktische Grenzen vor allem im Hinblick auf die Fertigungsmöglichkeiten gesetzt sind. In der Praxis hat sich beispielsweise die Verwendung von 18 und 17 Profilierungseinheiten bewährt, was im Hinblick auf die Feinjustierungsmöglichkeiten völlig ausreichend ist. Das System ist auch völlig unabhängig von einer Gewindesteigung, da die Deckungsgleichheit (Koinzidierung) der Profilierungseinheiten an jeder beliebigen Umfangsposition stattfinden kann. Weiterhin ist das System auch nicht auf Schraubverbindungen beschränkt. Es kann auch für andere Arten einer Verbindung von zwei Bauteilen eingesetzt werden. Beispielsweise kann das erfindungsgemäße Sicherungselement auch für Steckverbindungen eingesetzt werden, sofern die entsprechenden zu verbindenden Bauteile mit den oben beschriebenen Profilierungen ausgestattet sind.

Mit anderen Worten handelt es sich bei der Erfindung gewissermaßen um eine konzentrische Anwendung des Nonius-Prinzips, mit dem zwei Bauteile mit Hilfe eines Sicherungselements (Sperrelement) in einer im Prinzip beliebigen Position zueinander arretiert werden können. Das Nonius-Prinzip wird dabei durch die konzentrische Außen- und Innenprofilierung des Sicherungselements realisiert, die sich um mindestens eine Profilierungseinheit unterscheiden. Im Zusammenspiel mit den entsprechenden (gegengleichen) Profilierungen der zu arretierenden Bauteile, deren Formgebung einen Sicherungsspalt definieren, in den das Sicherungselement eingesetzt wird, zeigen sich die Vorteile des Nonius-Prinzips bei dieser Anwendung. Der Sicherungsspalt wird zwischen den zu arretierenden Bauteilen ausgebildet, wobei die Profilierungen des Sicherungsspalts in gegengleicher Weise den Profilierungen des Sicherungselements entsprechen. Das Nonius-Prinzip sorgt dabei dafür, dass das Sicherungselement an einer bestimmten Stelle passgenau einrasten kann und damit eine relative Bewegung der Bauteile zueinander sicher verhindert und die Verbindung der Bauteile arretiert. Das Nonius-Prinzip manifestiert sich dabei als körperliches Merkmal des Sicherungselements, da die Außenprofilierung dem Nonius (kleinerer Abstand zwischen den einzelnen Profilierungseinheiten) und die Innenprofilierung dem Limbus (größerer Abstand zwischen den Profilierungseinheiten) oder gegebenenfalls auch umgekehrt in konzentrischer Weise entsprechen. Gemäß dem Nonius-Prinzip steht sich dabei immer genau ein Profilierungseinheitenpaar gegenüber, wie sich aus der Anschauung eines Messschiebers ergibt. Gemäß der Erfindung findet die Außen- und die Innenprofilierung des Sicherungselements eine Entsprechung bei dem Sicherungsspalt, der von den zu arretierenden Bauteilen gebildet wird. Durch die gegengleiche Entsprechung ist es möglich, dass bei einer beliebigen Position der Bauteile zueinander immer ein Sicherungsspalt ausgebildet wird, in den das Sicherungselement einrasten kann. Die konkrete Geometrie des Sicherungsspalts sieht, abhängig von der Position der Bauteile zueinander, im Prinzip immer anders aus, da die äußere und die innere Profilierung des Sicherungsspalts abhängig von der Position der Bauteile zueinander in unterschiedlicher Position zueinander "zum Stehen kommen". Sämtliche möglichen Geometrien des Sicherungsspalts werden dabei von dem Sicherungselement abgebildet, das dann an entsprechender Position eingesetzt werden kann. Das Nonius-Prinzip ermöglicht es, dass sich immer eine Position ergibt, in der das Sicherungselement einrasten kann.

Die Außenprofilierung des Sicherungselementes läuft an der Außenseite, also an einer äußeren Mantelfläche, des Sicherungselementes um. Die innen umlaufende Innenprofilierung läuft an der Innenseite, also an einer inneren Mantelfläche, des Sicherungselementes um. Hierbei ist es bevorzugt, dass die Außenprofilierung und/oder die Innenprofilierung nur einen Teilbereich der äußeren und/oder inneren Mantelfläche des ringförmigen Sicherungselementes bedeckt. Insbesondere kann es vorgesehen sein, dass nur ein unterer, endständiger Bereich des ringförmigen Sicherungselementes von der Außenprofilierung und der Innenprofilierung bedeckt ist. Das Sicherungselement weist gewissermaßen einen Kragen auf, der mit der erfindungsgemäßen Außenprofilierung und Innenprofilierung versehen ist. Der andere endständige Bereich des ringförmigen Sicherungselementes kann eine im Umfang größere, außen umlaufende Mantelfläche aufweisen, die nicht mit der erfindungsgemäßen Profilierung versehen ist. Dieser Bereich kann beispielsweise glatt oder mit kleinen Riffelungen oder Rändelungen ausgestaltet sein. Riffelungen, Rändelungen oder ähnliches haben den Vorteil, dass ein derart ausgestattetes Sicherungselement für eine manuelle Montage oder für eine Montage mit einem Handhabungsgerät besser greifbar und betätigbar ist.

Zweckmäßigerweise sind ein oder mehrere Mittel zur Sicherung des Sicherungselementes im montierten Zustand vorgesehen, beispielsweise kann das erste Bauteil mit einem (zusätzlichen) Innengewinde versehen sein, so dass nach der Montage des Sicherungselementes das Sicherungselement selbst durch eine weitere Sicherungsschraube gesichert werden kann. In einer anderen Ausgestaltung kann das erste Bauteil beispielsweise mit einem umlaufenden Einstich versehen sein, der im zusammengebauten Zustand des Sicherungssystems an das montierte Sicherungselement angrenzt, so dass das Sicherungselement durch einen üblichen Nutring oder Sicherungsring axial lagegesichert und fixiert werden kann. Andere Möglichkeiten zur Sicherung des Sicherungselementes sind beispielsweise Stifte oder Splinte, die je nach Anwendungsfall eingesetzt werden können.

Je nach Art und Bauweise der Bauteile, deren Verbindung zueinander zu sichern ist, können das erfindungsgemäße Sicherungselement und das Sicherungssystem unterschiedlich ausgestaltet sein. Beispielsweise kann ein innenliegendes Bauteil gesichert werden, z.B. wenn ein rotierendes Bauteil auf einer Welle oder einem Adapter mit einer Mutter zu sichern ist. In einem anderen Fall kann ein außenliegendes Bauteil gesichert werden. Weiterhin ist es allgemein möglich, eine Schraube mit dem erfindungsgemäßen Sicherungssystem zu sichern. In jedem Fall unterscheidet sich die Anzahl der PFE zwischen der Außenprofilierung des Sicherungselementes von der Anzahl der PFE der Innenprofilierung. Hierbei ist es möglich, dass entweder die Anzahl der PFE der Außenprofilierung oder die Anzahl der PFE der Innenprofilierung höher ist.

In einer besonders bevorzugten Ausgestaltung des Sicherungselementes sind die PFE der Außenprofilierung und/oder der Innenprofilierung des Sicherungselementes wellenförmig oder in etwa wellenförmig ausgestaltet. Eine Wellenform der PFE hat besondere Vorteile im Hinblick auf den Fertigungsprozess des erfindungsgemäßen Sicherungselementes. Die PFE können jedoch im Prinzip auch beliebig andere Geometrien aufweisen, beispielsweise können die Profilierungen rhombenförmig oder keilförmig oder zackenförmig oder als Mischformen realisiert sein. Weiterhin ist es nicht erforderlich, dass die PFE der Außenprofilierung und der Innenprofilierung gleich gestaltet sind.

Es ist durchaus möglich, dass sich die Form der Außenprofilierung und die der Innenprofilierung, unabhängig von der Anzahl der PFE, auch von der Form her unterscheiden. Die Form der PFE kann insbesondere in Anpassung an die Fertigungsmöglichkeiten des Sicherungselementes und auch der übrigen Komponenten des Sicherungssystems angepasst werden. Insbesondere hängen die Möglichkeiten für eine Fertigung auch von den Dimensionen des Sicherungssystems ab.

Die Anzahl der PFE der Außenprofilierung und der Innenprofilierung des Sicherungselementes unterscheidet sich erfindungsgemäß um mindestens 1. Beispielsweise kann die niedrigere Anzahl der Profilierungseinheiten mindestens 9 und die höhere Anzahl der Profilierungseinheiten mindestens 10 betragen, beispielsweise genau 9 und 10. In einem anderen Beispiel kann die niedrigere Anzahl der Profilierungseinheiten beispielsweise 15 und die höhere Anzahl der Profilierungseinheiten 18 betragen. Auch andere Anzahlen und Differenzen der Profilierungseinheiten sind möglich. In der Praxis hat sich eine Differenz von genau 1 als besonders vorteilhaft erwiesen. Bei einem besonders bevorzugten Ausführungsbeispiel sind die Anzahlen der PFE 17 und 18, z.B. 18 PFE bei der Außenprofilierung und 17 PFE bei der Innenprofilierung des Sicherungselements.

Die Anzahl der Profilierungseinheiten und die Form, wie oben bereits erwähnt, kann in Abhängigkeit von dem jeweiligen Anwendungsfall und in Abhängigkeit von den Dimensionen des Sicherungssystems und den damit verbundenen Fertigungsmöglichkeiten angepasst werden. Die Profilierungsstrukturen des erfindungsgemäßen Sicherungssystems können beispielsweise mit Frästechniken oder durch Kunststoff-Guss, insbesondere Spritzguss, Metallguss, 3D-Drucken, Schmieden, Stanzen, Pressen, Lasern, Schleifen oder Räumen hergestellt werden.

Für eine einfache Montage des erfindungsgemäßen Sicherungselementes ist es vorteilhaft, wenn die Außenprofilierung und die Innenprofilierung des Sicherungselementes im Zusammenspiel mit der außen umlaufenden Profilierung und der innen umlaufenden Profilierung des ersten und des zweiten Bauteils ein leichtes Spiel beim Einsetzen des Sicherungselementes in den zwischen dem ersten und dem zweiten Bauteil gebildeten Sicherungsspalt ermöglichen. Die Bauteile sollten also so ausgestaltet sein, dass kein hoch präziser Lagersitz realisiert wird, sondern dass die Teile leicht schiebend ineinander greifen. Die Fertigungstoleranzen werden vorzugsweise so gewählt sein, dass eine Spielpassung (Welle -, Bohrung +) erreicht wird, vergleichbar mit der Spielpassung bei den Elementen eines Teleskoprohres.

In einer weiteren Ausgestaltung des erfindungsgemäßen Sicherungselements befinden sich die Außenprofilierung und die Innenprofilierung des Sicherungselements auf zwei unterschiedlichen Ebenen des Sicherungselements. Bei der Außenprofilierung und der Innenprofilierung handelt es sich also um eine erste Profilierung und eine zweite Profilierung, die jeweils auf unterschiedlichen Kreisumfängen auf unterschiedlichen Ebenen des Sicherungselements umlaufen, wobei ein Kreisumfang außen und der andere Kreisumfang weiter innen verläuft. Das Sicherungselement kann dabei in gewisser Weise im Prinzip wie eine runde Scheibe mit den auf Stufen angeordneten ringförmig umlaufenden Profilierungen ausgebildet sein, sodass auch diese Ausführungsform ringförmig ist. Auch in dieser Ausgestaltung werden die erste Profilierung und die zweite Profilierung jeweils aus einer Mehrzahl von Profilierungseinheiten gebildet, wobei die Anzahl der Profilierungseinheiten der ersten Profilierung und die Anzahl der Profilierungseinheiten der zweiten Profilierung der Anzahl von Teilstrichen bei unterschiedlichen Maßstäben gemäß dem Nonius-Prinzip entsprechen und wobei sich die Anzahl der Profilierungseinheiten der ersten Profilierung und die Anzahl der Profilierungseinheiten der zweiten Profilierung um mindestens 1 unterscheiden und wobei sich an genau einer Position eine Profilierungseinheit der ersten Profilierung und eine Profilierungseinheit der zweiten Profilierung genau gegenüber stehen.

Die Erfindung umfasst weiterhin ein Sicherungssystem für eine Verbindung von einem ersten Bauteil oder einer ersten Bauteilanordnung und einem zweiten Bauteil oder einer zweiten Bauteilanordnung, wobei das erste Bauteil oder die erste Bauteilanordnung einen Bereich mit einer außen umlaufenden Profilierung aufweist, und wobei das zweite Bauteil oder die zweite Bauteilanordnung einen Bereich mit einer innen umlaufenden Profilierung aufweist. Im verbundenen Zustand der Bauteile bildet sich zwischen der Profilierung des ersten Bauteils oder der ersten Bauteilanordnung und der Profilierung des zweiten Bauteils oder der zweiten Bauteilanordnung ein ringförmiger Sicherungsspalt aus, in den das beschriebene Sicherungselement als Bestandteil des Sicherungssystems eingesetzt werden kann. Der ringförmige Sicherungsspalt kann auch so ausgebildet sein, dass die innen und die außen umlaufende Profilierung der Bauteile im zusammengesetzten Zustand der Bauteile stufenförmig angeordnet sind, sodass ein Sicherungselement eingesetzt werden kann, dessen Profilierungen auf zwei Ebenen angeordnet sind.

Die Verbindung der beiden Bauteile oder der Bauteilanordnungen des erfindungsgemäßen Sicherungssystems ist vorzugsweise eine Schraubverbindung, wobei dann das erste Bauteil (oder Bauteilanordnung) mit einem ersten Gewinde, insbesondere einem Außengewinde, und das zweites Bauteil (oder Bauteilanordnung) mit einem zweiten Gewinde, insbesondere einem Innengewinde, versehen ist. Das zweite Bauteil und das erste Bauteil sind mittels dieser Gewinde zusammenschraubbar. Das erste Bauteil weist einen Bereich mit einer auf der Außenseite, also außen, umlaufenden Profilierung auf. Das zweite Bauteil weist einen Bereich mit einer auf der Innenseite, also innen, umlaufenden Profilierung auf. Im zusammengeschraubten Zustand bildet sich zwischen der Profilierung des ersten Bauteils und der Profilierung des zweiten Bauteils ein ringförmiger Sicherungsspalt, der zweckmäßigerweise von außen zugänglich ist. Weiterhin umfasst das Sicherungssystem das beschriebene Sicherungselement, wobei das Sicherungselement ringförmig ist und eine außen umlaufende Außenprofilierung und eine innen umlaufende Innenprofilierung aufweist. Sowohl die Außenprofilierung als auch die Innenprofilierung wird jeweils von einer Mehrzahl von Profilierungseinheiten (PFE) gebildet, wobei sich die Anzahl der PFE um mindestens 1 unterscheidet und exakt eine Profilierungseinheit innen und exakt eine Profilierungseinheit außen sich genau gegenüberstehen. Dieses Sicherungselement ist zur Anordnung in dem Sicherungsspalt in der oben beschriebenen Weise vorgesehen.

Zweckmäßigerweise entspricht die Anzahl der PFE der außen umlaufenden Profilierung des ersten Bauteils exakt der Anzahl der PFE der Innenprofilierung des Sicherungselementes, wobei die außen umlaufende Profilierung des ersten Bauteils (oder der ersten Bauteilanordnung) gegengleich zur Innenprofilierung des Sicherungselementes ist. Weiterhin entspricht die Anzahl der PFE der innen umlaufenden Profilierung des zweiten Bauteils exakt der Anzahl der PFE der Außenprofilierung des Sicherungselementes, wobei die innen umlaufende Profilierung des zweiten Bauteils (oder der zweiten Bauteilanordnung) gegengleich zur Außenprofilierung des Sicherungselementes ist. Die Innenprofilierung des Sicherungselementes ist damit komplementär zu der außen umlaufenden Profilierung des ersten Bauteils. Die Außenprofilierung des Sicherungselements ist komplementär zur der innen umlaufenden Profilierung des zweiten Bauteils. Bei dem ersten Bauteil kann es sich beispielsweise allgemein um einen Träger, z. B. eine Welle, einen Wellenstumpf, eine Nabe oder einen Adapter, beispielsweise einen Nabenadapter, handeln. Bei dem zweiten Bauteil kann es sich um eine Mutter, beispielsweise um eine Spannmutter oder Überwurfmutter, handeln.

In einer besonders bevorzugten Ausgestaltung des erfindungsgemäßen Sicherungssystems umfasst das Sicherungssystem weiterhin wenigstens ein Mittel zur Sicherung des Sicherungselementes im montierten Zustand. Bezüglich weiterer Einzelheiten zu diesem Mittel sowie auch bezüglich weiterer Einzelheiten zu den übrigen Merkmalen des Sicherungssystems wird auf die obige Beschreibung verwiesen.

Weiterhin umfasst die Erfindung die Verwendung des erfindungsgemäßen Sicherungssystems zur Sicherung einer Schraubverbindung, die beispielsweise zur Befestigung eines für eine rotierende Bewegung vorgesehen Bauteils vorgesehen ist. Insbesondere bei rotierenden Bauteilen kann es durch die hiermit verbundenen Bewegungen zu einem Lösen von Schraubverbindungen über die Zeit kommen. Dies wird mit dem erfindungsgemäßen Sicherungssystem vermieden. Ein besonders bevorzugtes Beispiel für die Verwendung des erfindungsgemäßen Sicherungssystems ist die Sicherung eines Zentralverschlusses für ein Rad bei einem Fahrzeug, insbesondere bei einem Kraftfahrzeug, insbesondere im Zusammenhang mit einer Radnabe oder einem Radnabenadapter. Ein solcher Zentralverschluss ist besonderen rotatorischen Belastungen ausgesetzt, so dass das erfindungsgemäße Sicherungssystem hier mit großem Vorteil eingesetzt werden kann. Auch für die übliche Befestigung von Kraftfahrzeugrädern mit Radmuttern oder Radschrauben kann das erfindungsgemäße Sicherungssystem vorteilhaft zum Einsatz kommen. Weiterhin kann das erfindungsgemäße Sicherungssystem allgemein für die Sicherung einer Schraube eingesetzt werden. Bei Verwendung des erfindungsgemäßen Sicherungssystems für eine Schraube kann beispielsweise auf die Ausgestaltung der Schraube als Dehnschraube verzichtet werden. Dies hat den Vorteil, dass eine solche Schraube im Prinzip beliebig oft wieder verwendet werden kann, im Gegensatz zu einer Dehnschraube. Das erfindungsgemäße Sicherungssystem kann jedoch auch als zusätzliche Sicherung bei einer Dehnschraube eingesetzt werden. Darüber hinaus eignet sich das erfindungsgemäße Sicherungssystem im Prinzip für die Sicherung aller Arten von Schraubverbindungen. Es kann in den verschiedenen Bereichen des Maschinenbaus zum Einsatz kommen. Beispiele hierfür sind generell Antriebswellen und Getriebewellen, beispielsweise im Zusammenhang mit dem Fahrzeugbau, dem Flugzeugbau oder bei Windkraftanlagen, Schiffsschrauben oder Ventilatoren. Allgemein eignet sich das erfindungsgemäße Sicherungssystem bzw. das erfindungsgemäße Sicherungselement für die mechanische Sicherung von allen Schraubverbindungen, die als Bestandteil eines entsprechenden Sicherungssystems eingerichtet sind. Im Besonderen eignet sich das erfindungsgemäße Sicherungssystem für die mechanische Sicherung von Schraubverbindungen, bei denen die montierte Position der über die Schraubverbindung verbundenen Bauteile nicht in vorhersehbarer Weise festgelegt ist, sondern bei denen die Position der Bauteile zueinander im montierten Zustand beispielsweise vom Drehmoment beim Anziehen der Schraubverbindung abhängig ist.

Weitere Merkmale und Vorteile der Erfindung ergeben sich aus der nachfolgenden Beschreibung von Ausführungsbeispielen im Zusammenhang mit den Zeichnungen. Hierbei können die einzelnen Merkmale jeweils für sich oder in Kombination miteinander verwirklicht sein.

### Kurze Beschreibung der Zeichnungen

In den Figuren zeigen
- Fig. 1A, B: isometrische Explosivdarstellungen der Elemente des erfindungsgemäßen Sicherungssystems in einer ersten Ausführungsform in zwei Ansichten (Teilfiguren A und B);
- Fig. 2A, B - Fig. 5A, B: isometrische Darstellungen der Elemente des erfindungsgemäßen Sicherungssystems in einer weiteren Ausführungsform jeweils in zwei Ansichten (Teilfiguren A und B);
- Fig. 6: Schnittdarstellung des Sicherungssystems aus Fig. 5;
- Fig. 7A, B - Fig. 10A, B: isometrische Darstellungen der Elemente des erfindungsgemäßen Sicherungssystems in einer weiteren Ausführungsform jeweils in zwei Ansichten (Teilfiguren A und B);
- Fig. 11: schematische Darstellung von verschiedenen Ausgestaltungen der Profilierungsstrukturen des erfindungsgemäßen Sicherungssystems;
- Fig. 12: weitere Beispiele für mögliche Profilierungsstrukturen;
- Fig. 13: isometrische Darstellung eines Radnabenadapters gemäß der Erfindung;
- Fig. 14: isometrische Darstellung einer Radnabe gemäß der Erfindung;
- Fig. 15: isometrische Explosivdarstellung der Elemente des erfindungsgemäßen Sicherungssystems zur Sicherung eines Zentralverschlusses bei einem Kraftfahrzeugrad;
- Fig. 16: isometrische Explosivdarstellung der Elemente des erfindungsgemäßen Sicherungssystems zur Sicherung einer Schraube;
- Fig. 17A, B: Aufsicht auf das Sicherungssystem aus Fig. 16 ohne Sicherungselement (Teilfigur A) und mit Sicherungselement und zusätzlichem Nutring (Teilfigur B);
- Fig. 18: Schnittdarstellungen des Sicherungssystems aus Fig. 16;
- Fig. 19: isometrische Explosivdarstellung der Elemente des erfindungsgemäßen Sicherungssystems zur Sicherung einer weiteren Ausgestaltung eines Zentralverschlusses bei einem Kraftfahrzeugrad; und
- Fig. 20: Schnittdarstellung des Sicherungssystems aus Fig. 19.

### Beschreibung von Ausführungsbeispielen

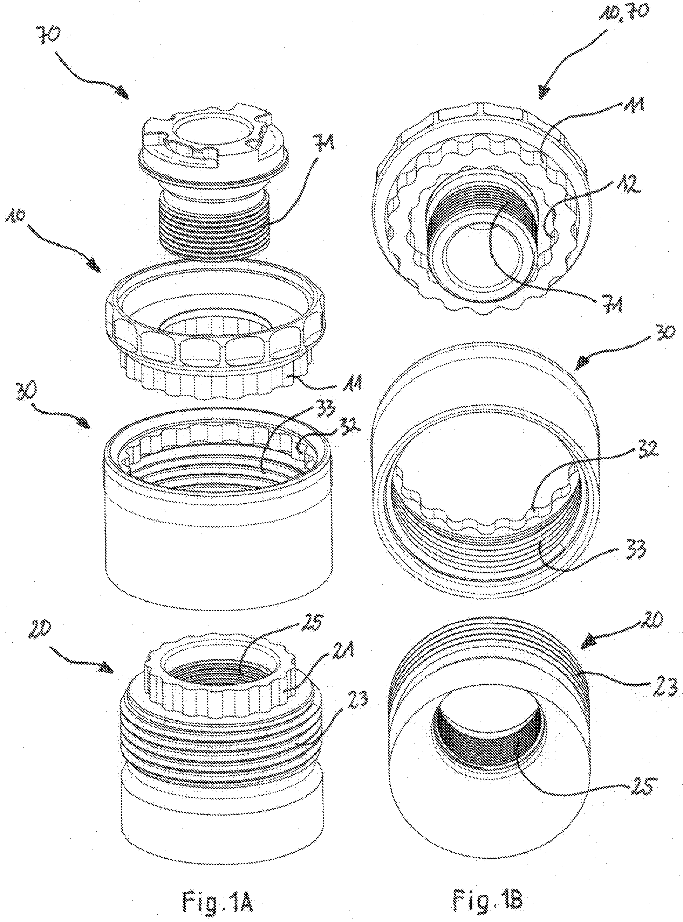

**Fig. 1A****, B** illustrieren die verschiedenen Elemente des erfindungsgemäßen Sicherungssystems in zwei Ansichten (Teilfiguren 1A und 1B) in Explosivdarstellungen. Dieses Beispiel für das Sicherungssystem umfasst ein erstes Bauteil 20, beispielsweise einen Wellenstumpf, ein zweites Bauteil 30, beispielsweise eine Überwurfmutter, und ein ringförmiges Sicherungselement 10. Weiterhin ist eine Fixierungsschraube 70 vorgesehen. Das erste Bauteil 20 ist in einem mittleren Bereich mit einem Außengewinde 23 versehen. Das zweite Bauteil 30 weist ein entsprechendes Innengewinde 33 auf, so dass das zweite Bauteil 30, beispielsweise die Überwurfmutter, auf das erste Bauteil 20 aufgeschraubt werden kann. Durch diese Schraubverbindung kann beispielsweise ein rotierendes Bauteil (nicht gezeigt), das an dem ersten Bauteil 20 zu befestigen ist, fixiert werden. Zur Sicherung dieser Schraubverbindung umfassen die Bauteile 20, 30 Strukturen, die eine Arretierung der Schraubverbindung mittels des ringförmigen Sicherungselementes 10 erlauben. Bei diesen Strukturen handelt es sich in Bezug auf das erste Bauteil 20 um eine in diesem Beispiel in einem endständigen Bereich angeordnete, an der Außenseite umlaufende Profilierung 21. In Bezug auf das zweite Bauteil 30 handelt es sich bei diesen Strukturen um eine auf der Innenseite umlaufende Profilierung 32, die in diesem Beispiel in einem endständigen Bereich angeordnet ist. Der Bereich mit der außen umlaufenden Profilierung 21 des ersten Bauteils 20 ist im Umfang kleiner als der Bereich mit dem Außengewinde 23. Wenn das zweite Bauteil 30 auf das erste Bauteil 20 aufgeschraubt wird, wird zwischen der innen umlaufenden Profilierung 32 des zweiten Bauteils 30 und der außen umlaufenden Profilierung 21 des ersten Bauteils 20 ein Sicherungsspalt gebildet, in den das Sicherungselement 10 eingesetzt wird. Das Sicherungselement 10 weist dabei gewissermaßen einen Kragen mit komplementären Strukturen auf, also mit einer außen umlaufende Außenprofilierung 11 und einer an der Innenseite des ringförmigen Sicherungselementes innen umlaufende Innenprofilierung 12 auf. Diese Strukturen befinden sich in dieser Darstellung in einem unteren, endständigen Bereich des Sicherungselementes 10. Die Anzahl der Profilierungseinheiten (PFE) der Außenprofilierung 11 entspricht der Anzahl der PFE der innen umlaufenden Profilierung 32 des zweiten Bauteils 30 und die Anzahl der PFE der Innenprofilierung 12 des Sicherungselementes 10 entspricht der Anzahl der PFE der außen umlaufenden Profilierung 21 des ersten Bauteils 20. Wesentlich für die Funktion des erfindungsgemäßen Sicherungselementes 10 bzw. des Sicherungssystems ist, dass sich die Anzahl der PFE der Außenprofilierung 11 und der Innenprofilierung 12 des Sicherungselementes 10 um mindestens 1 unterscheiden, wobei die Anzahlen der Profilierungen des ersten Bauteils 20 und des zweiten Bauteils 30 entsprechend sind. Bei der Montage des Sicherungselementes wird das Sicherungselement 10 in dem zwischen dem ersten Bauteil 20 und dem zweiten Bauteil 30 gebildeten Sicherungsspalt (Ringspalt) so lange eingesetzt, gedreht und erneut eingesetzt, bis es passgenau einrastet, so dass die Schraubverbindung zwischen dem ersten Bauteil 20 und dem zweiten Bauteil 30 arretiert ist. Zur Lagefixierung des Sicherungselements 10 ist eine Fixierungsschraube 70 mit einem Gewindebolzen 71 vorgesehen. Die Fixierungsschraube 70 wird abschließend in ein Innengewinde 25 des ersten Bauteils 20 eingesetzt.

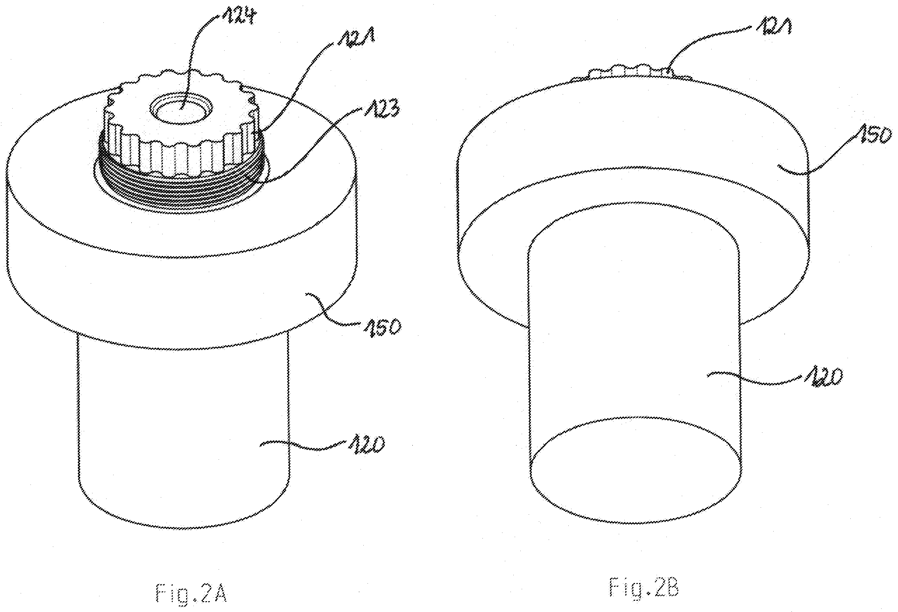

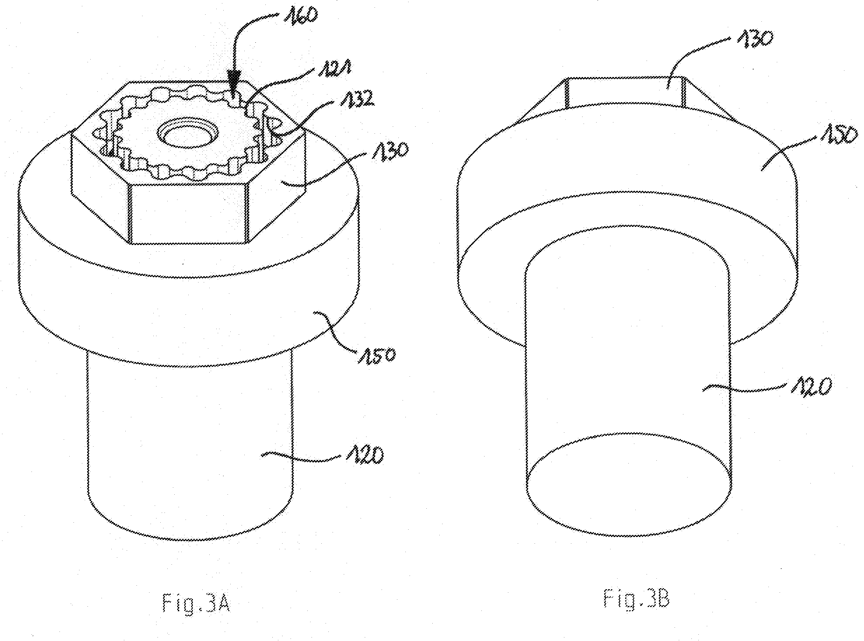

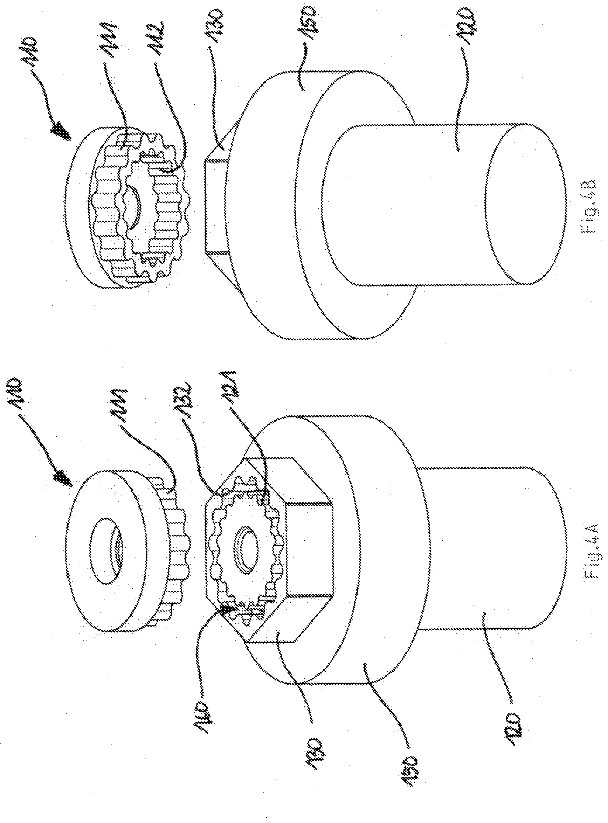

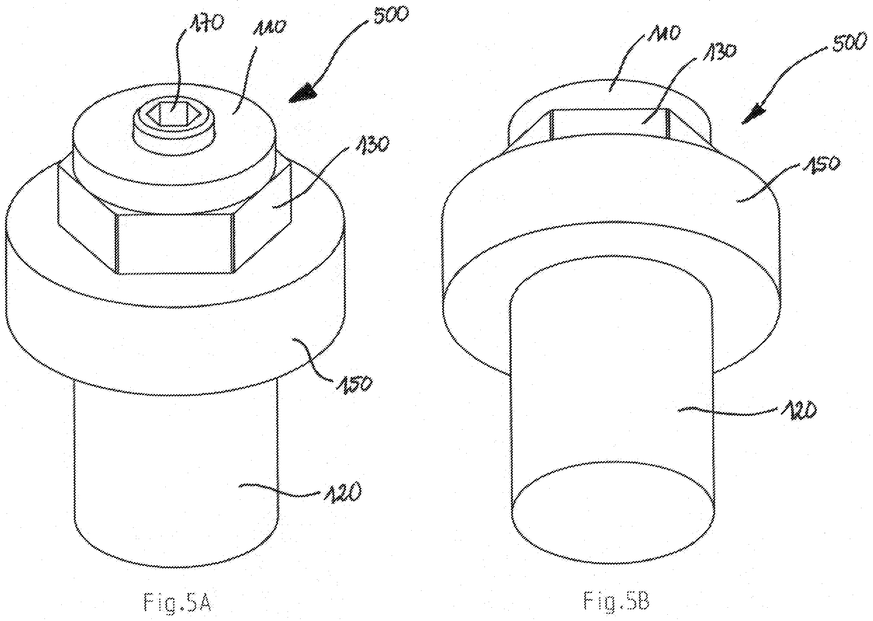

Die **Fig. 2A****, B** - **5A, B** illustrieren eine Ausgestaltung des erfindungsgemäßen Sicherungssystems für die Sicherung einer Schraubverbindung am Ende einer Welle, also an einem Wellenstumpf, jeweils in zwei isometrischen Ansichten (Teilfiguren A und B). Fig. 2 zeigt hierbei zunächst das erste Bauteil 120, an dem ein weiteres Bauteil 150 befestigt ist. Bei dem weiteren Bauteil 150 kann es sich beispielsweise um ein für eine rotierende Bewegung vorgesehenes Bauteil handeln, beispielsweise ein Rad oder Ähnliches, das auf dem wellenstumpfförmigen ersten Bauteil 120 zu befestigen ist. Das weitere Bauteil 150 wird auf das erste Bauteil 120 aufgesetzt und mit einer Mutter (zweites Bauteil 130) fixiert, wobei diese Fixierung mittels des erfindungsgemäßen Sicherungssystems gesichert wird. Vergleichbar mit dem Bauteil 20 aus Fig. 1 ist in einem endständigen Abschnitt des ersten Bauteils 120 ein Außengewinde 123 und abschließend eine außen umlaufende wellenförmige Profilierung 121 vorgesehen. An der Stirnseite dieses endständigen Abschnitts des ersten Bauteils 120 ist eine sacklochförmige Vertiefung 124 mit einem Innengewinde, das der später noch zu erläuternden weiteren Sicherung des Sicherungselementes dient, vorgesehen. Fig. 3 zeigt zusätzlich zum ersten Bauteil 120 ein zweites Bauteil 130 in Form einer Spannmutter. Das Bauteil 130 (Spannmutter) wird über ein hier nicht sichtbares Innengewinde auf das Außengewinde 123 des ersten Bauteils 120 aufgeschraubt. Das zweite Bauteil 130 weist eine an der Innenseite in einem endständigen Bereich innen umlaufende Profilierung 132 auf. Die innen umlaufende Profilierung 132 des zweiten Bauteils 130 bildet zusammen mit der außen umlaufenden Profilierung 121 des ersten Bauteils 120 im montierten Zustand einen Sicherungsspalt 160. Die Geometrie oder Form dieses Sicherungsspaltes 160 in Bezug auf die konkreten Positionen der einzelnen PFE der Profilierungen zueinander ist nicht vorhersehbar, da sie von der konkreten Position des zweiten Bauteils 130 auf dem ersten Bauteil 120 abhängen. Fig. 4 illustriert, wie das Sicherungselement 110, das in dieser Darstellung in einem unteren Abschnitt (Kragen) eine außen umlaufende Außenprofilierung 111 und eine innen umlaufende Innenprofilierung 112 aufweist, in den Sicherungsspalt 160 einzusetzen ist. Hierfür wird das Sicherungselement 110 in den Sicherungsspalt 160 eingesetzt, gedreht und wieder eingesetzt, bis es passgenau einrastet. Wie in dieser Darstellung zu erkennen ist, unterscheidet sich die Anzahl der PFE der Außenprofilierung 111 von der Anzahl der PFE der Innenprofilierung 112 des Sicherungselementes 110. In diesem Beispiel sind es 15 Profilierungseinheiten in der Außenprofilierung 111 und 18 Profilierungseinheiten in der Innenprofilierung 112. In einem anderen, besonders bevorzugten Ausführungsbeispiel können beispielsweise 17 bzw. 18 Profilierungseinheiten innen bzw. außen vorgesehen sein. Die Anzahl der PFE der innen umlaufenden Profilierung 132 des zweiten Bauteils 130 und die Anzahl der PFE der außen umlaufenden Profilierung 121 des ersten Bauteils 120 sind entsprechend angepasst. Wenn das Sicherungselement 110 im Sicherungsspalt 160 passgenau eingerastet ist, ist die Schraubverbindung zwischen dem ersten Bauteil 120 und dem zweiten Bauteil 130 arretiert und zuverlässig gesichert. Fig. 5 zeigt das Sicherungssystem 500 im vollständig montierten Zustand. Hierbei ist weiterhin eine Sicherungsschraube 170 gezeigt, die in dieser Ausgestaltung beispielhaft einen Innensechskant zum Angriff eines Betätigungswerkzeuges aufweist. Diese Sicherungsschraube 170 wird in das in Fig. 2 erkennbare Innengewinde der sacklochartigen Vertiefung 124 des ersten Bauteils 120 eingedreht, so dass auch das Sicherungselement 110 gesichert und lagefixiert ist.

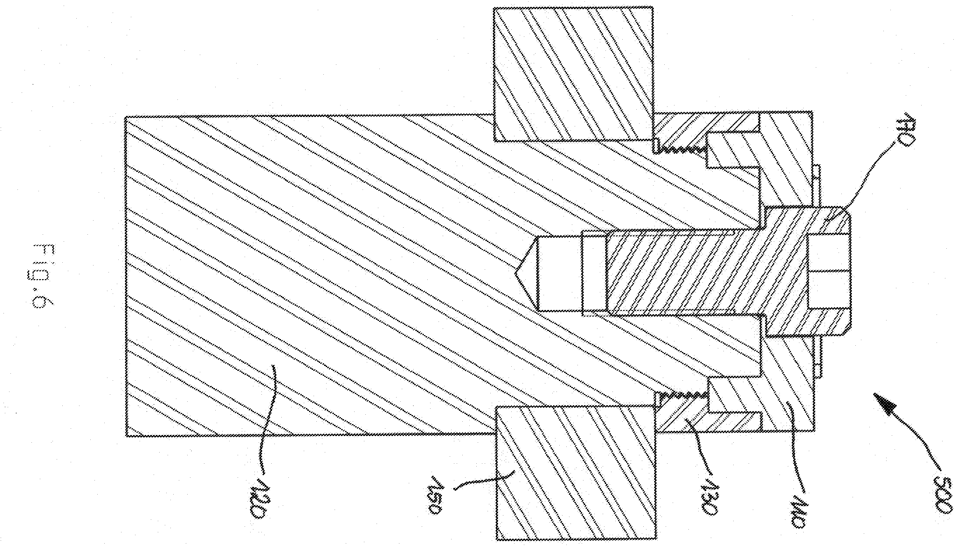

**Fig. 6** zeigt eine Schnittdarstellung des Sicherungssystems 500 aus Fig. 5 mit entsprechender Bezeichnung.

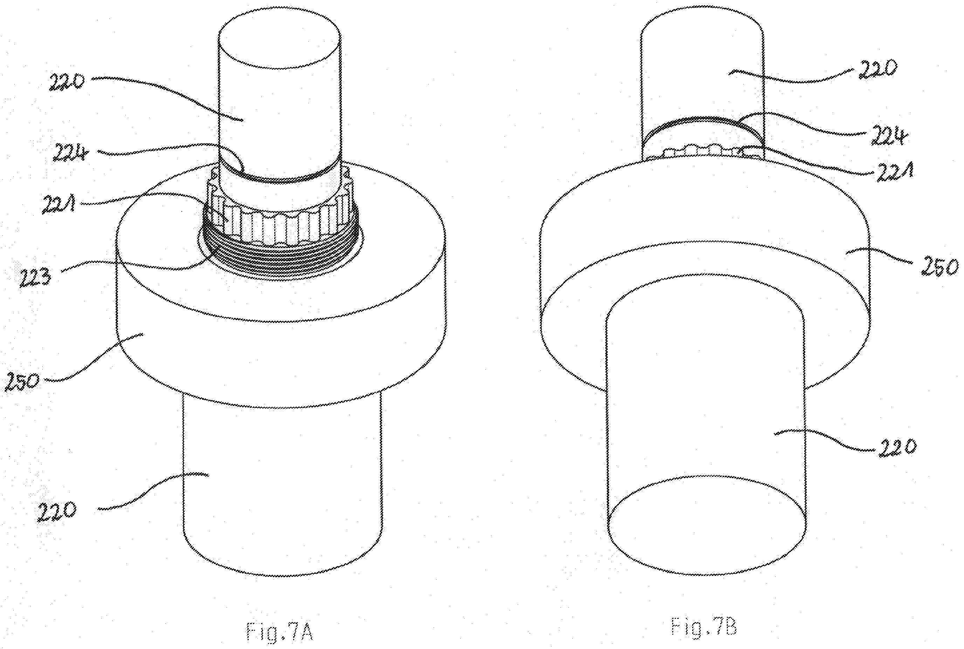

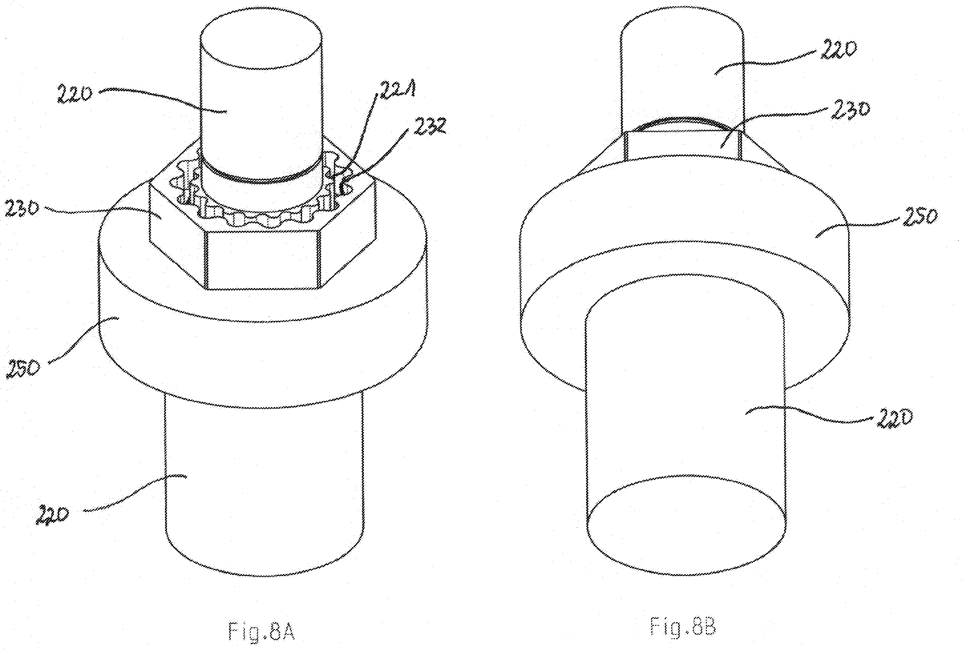

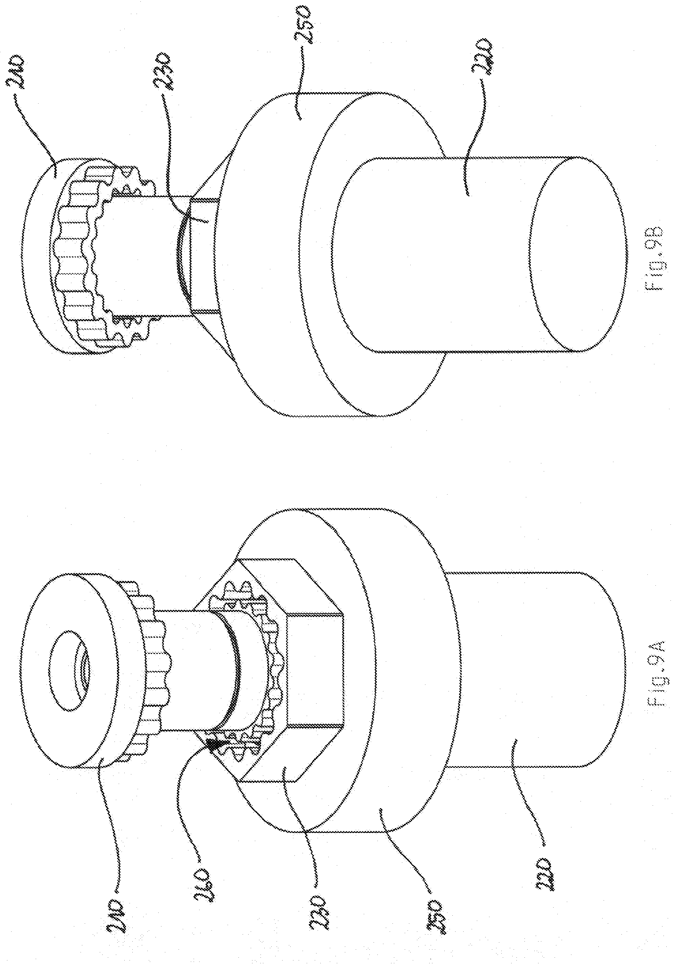

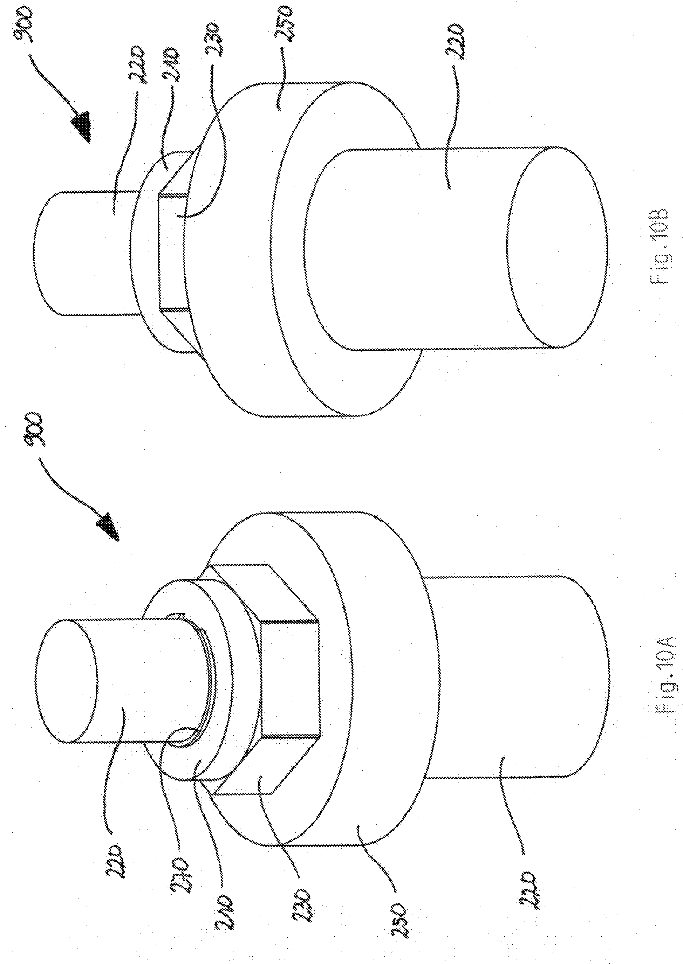

Die **Fig. 7A****, B - 10A, B** illustrieren eine weitere mögliche Ausgestaltung des erfindungsgemäßen Sicherungssystems, jeweils in zwei isometrischen Ansichten (Teilfiguren A und B), wobei ein weiteres Bauteil 250 auf einer durchgehenden Welle befestigt und gesichert wird. Fig. 7 zeigt die durchgehende Welle 220 als erstes Bauteil. An dieser Welle ist das weitere Bauteil 250, beispielsweise ein Rad, befestigt. Die Befestigung dieses Rades erfolgt mittels einer Schraubverbindung, die erfindungsgemäß gesichert wird. Hierfür weist die Welle 220 in einem Bereich, der benachbart zu dem weiteren Bauteil 250 liegt, ein Außengewinde 223 und einen anschließenden Bereich mit einer außen umlaufenden Profilierung 221 auf. Der Bereich mit der außen umlaufenden Profilierung ist im Umfang kleiner als der Bereich mit dem Außengewinde 123. In einem Abstand zu der außen umlaufenden Außenprofilierung 221 befindet sich ein umlaufender Einstich bzw. eine Nut 224, die der später noch zu erläuternden Sicherung des erfindungsgemäßen Sicherungselementes dient. Fig. 8 zeigt zusätzlich zum ersten Bauteil 220 in Form der durchgehenden Welle mit dem daran befestigten Bauteil 250 ein zweites Bauteil 230, das Bestandteil des Sicherungssystems ist. Vergleichbar mit der Darstellung in Fig. 3 ist das zweite Bauteil 230 in Form einer Spannmutter ausgestaltet, die eine innen umlaufende Profilierung 232 aufweist. Die Profilierung 232 bildet zusammen mit der außen umlaufenden Profilierung 221 des ersten Bauteils 220 einen Sicherungsspalt 260, in den das Sicherungselement 210 (Fig. 9) einzusetzen ist. Entsprechend wie anhand der Fig. 4 beschrieben, wird das Sicherungselement 210 in den Sicherungsspalt 260 eingeführt und so lange gedreht, bis es passgenau einrastet und somit die Schraubverbindung zwischen dem ersten Bauteil 220 und dem zweiten Bauteil 230 arretiert. Fig. 10 zeigt den fertig montierten Zustand des Sicherungssystems 900. Zur axialen Lagefixierung des Sicherungselementes 210 ist ein Nutring 270 (Seegering) vorgesehen, der in den Einstich 224 des ersten Bauteils 220 (Fig. 7) eingreift.

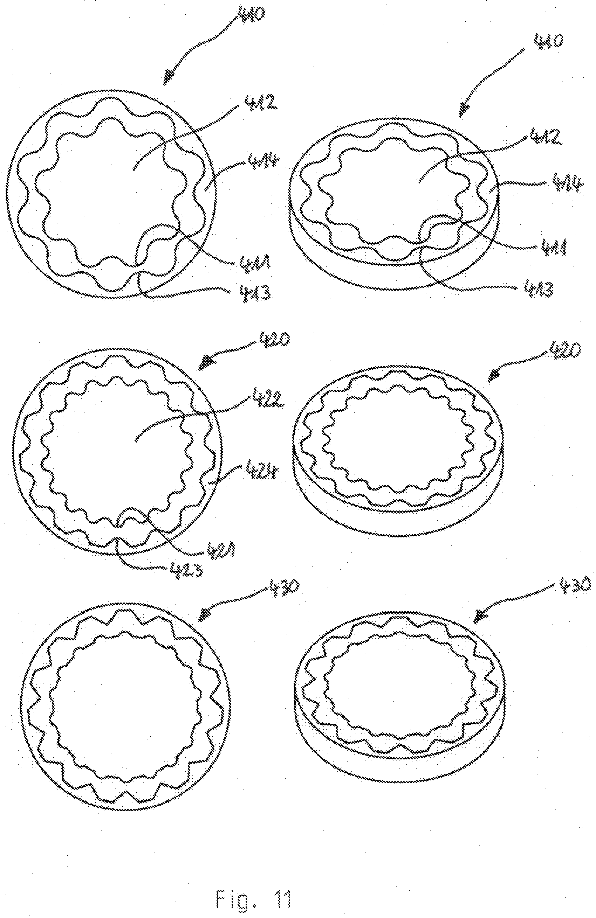

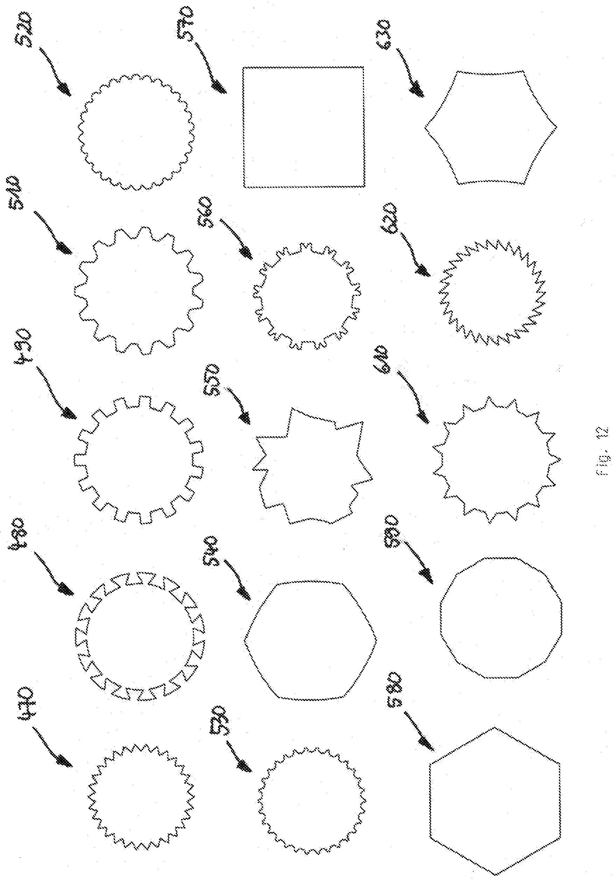

**Fig. 11** illustriert in schematischer Weise Möglichkeiten für die Geometrien der Profilierungsstrukturen des erfindungsgemäßen Sicherungssystems. Gezeigt sind jeweils eine Aufsicht und eine Ansicht von schräg oben der Profilierungsstrukturen. Das mit 410 bezeichnete Beispiel zeigt wellenförmige Strukturen, wobei sowohl die außen umlaufende Profilierung 411 eines innenliegenden Bauteils 412 als auch die innen umlaufende Profilierung 413 eines außenliegenden Bauteils 414 wellenförmig mit 9 bzw. 10 Profilierungseinheiten gestaltet sind. Zwischen der Profilierung 411 und der Profilierung 413 wird ein Sicherungsspalt gebildet, in den ein erfindungsgemäßes Sicherungselement einzusetzen ist. Das Bezugszeichen 420 bezeichnet ein weiteres Beispiel für eine mögliche Geometrie der Profilierungsstrukturen. Die außen umlaufende Profilierung 421 des innenliegenden Bauteils 422 ist im Prinzip wellenförmig gestaltet. Die innen umlaufende Profilierung 423 eines außenliegenden Bauteils 424 ist rhombenförmig ausgestaltet. Das mit dem Bezugszeichen 430 bezeichnete Beispiel zeigt eine weitere Möglichkeit für die Ausgestaltung der Profilierungsstrukturen. Die in der **Fig. 12** gezeigten Beispiele 470, 480, 490, 510, 520, 530, 540, 550, 560, 570, 580, 590, 610, 620, 630 deuten weitere prinzipielle Möglichkeiten für die Ausgestaltung der Profilierungen an, wobei die gezeigten Formen sowohl für die Innenprofilierung als auch für die Außenprofilierung des Sicherungselementes und für die entsprechenden Profile des ersten und des zweiten Bauteils verwendet werden können. Die gezeigten Muster sind im Prinzip beliebig miteinander kombinierbar und andere Muster sind ebenfalls möglich.

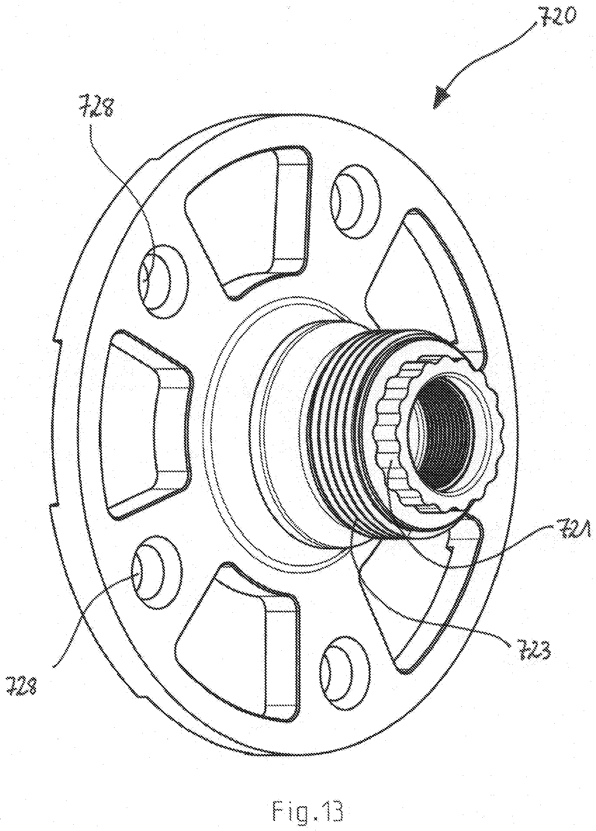

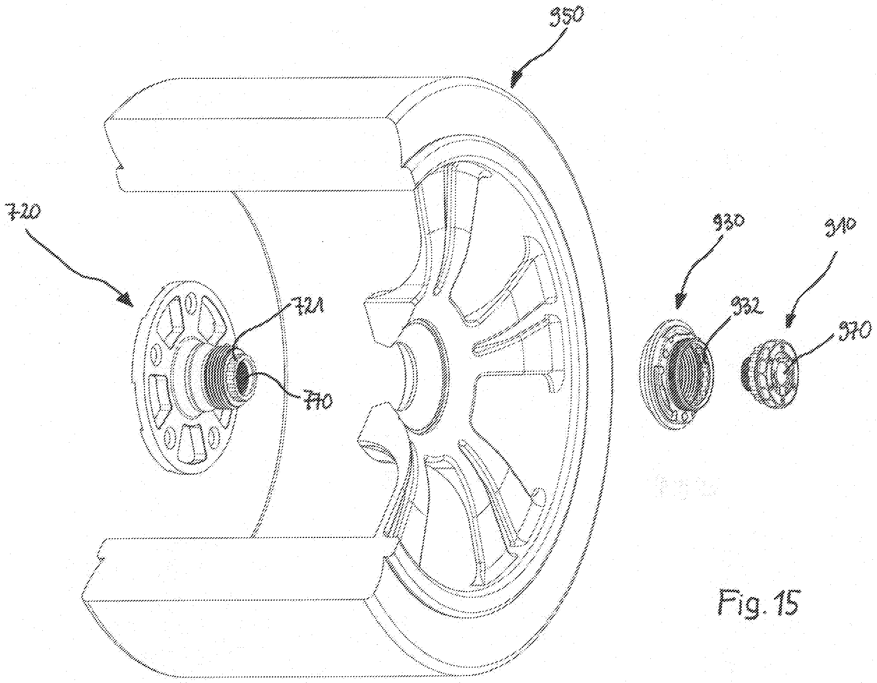

**Fig. 13** zeigt einen Radnabenadapter 720, der für die Verwendung in dem erfindungsgemäßen Sicherungssystems eingerichtet ist. Der Radnabenadapter 720 kann beispielsweise zusammen mit einer Standard-Radscheibe verwendet werden. Der Radnabenadapter 720 ist mit einem Außengewinde 723 auf einem zentral vorstehenden, hohlzylinderförmigen Fortsatz versehen. An das Außengewinde 723 schließt sich auf einem endständigen Abschnitt des Fortsatzes eine außen umlaufende Profilierung 721 an. Weiterhin sind Aussparungen (Bohrungen) 728 vorgesehen, mit denen eine Befestigung des Radnabenadapters 720 an einer Radscheibe erfolgen kann, wobei hierfür übliche Radschrauben verwendet werden können. An dem Radnabenadapter 720 kann als weiteres Bauteil eine Felge mit einem Zentralverschluss befestigt werden, wie es anhand von Fig. 15 näher erläutert wird.

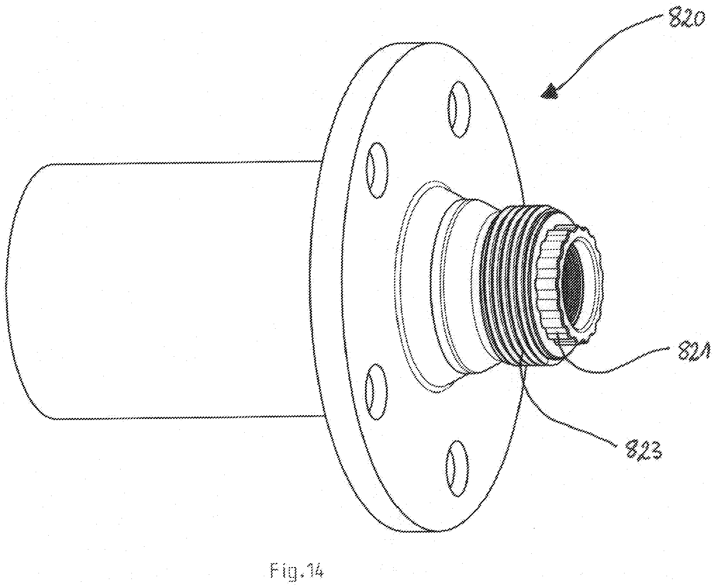

**Fig. 14** zeigt eine Radnabe 820, die für die Verwendung in dem erfindungsgemäßen Sicherungssystem eingerichtet ist. Die Radnabe 820 ist zur Befestigung eines üblichen Kraftfahrzeugrades geeignet, wobei das Kraftfahrzeugrad mit einem Zentralverschluss befestigt wird, der erfindungsgemäß gesichert wird. Die Radnabe 820 ist mit einem Außengewinde 823 auf einem zentral vorstehenden, hohlzylinderförmigen Fortsatz versehen. An das Außengewinde 823 schließt sich auf einem endständigen Abschnitt des Fortsatzes eine außen umlaufende Profilierung 821 an. An der Radnabe 820 kann als weiteres Bauteil eine Felge des Kraftfahrzeugrades (nicht gezeigt) mit einem Zentralverschluss befestigt werden, wobei eine Spannmutter (Zentralverschluss - nicht gezeigt) aufgeschraubt wird, die zusammen mit der außen umlaufenden Profilierung 821 einen Sicherungsspalt ausbildet, in den ein ringförmiges, erfindungsgemäßes Sicherungselement (nicht gezeigt) zur Arretierung der Schraubverbindung eingesetzt wird.

**Fig. 15** illustriert in einer Explosiv-Darstellung die Befestigung eines Kraftfahrzeugrades 950 an dem Radnabenadapter 720, wobei das Kraftfahrzeugrad 950 bzw. die Felge des Kraftfahrzeugrades 950 mit einer erfindungsgemäß eingerichteten Spannmutter 930 als Zentralverschluss befestigt wird. Die Abmessungen der Bauteile 720 und 930 sind so gewählt, dass im zusammengesetzten Zustand sich zwischen der innen umlaufenden Profilierung 932 der Spannmutter 930 und der außen umlaufenden Profilierung 721 des Radnabenadapters 720 ein Sicherungsspalt ausbildet, in den ein Sicherungselement 910 gemäß dem erfindungsgemäßen Prinzip eingesetzt wird, sodass die Schraubverbindung zwischen dem Radnabenadapter 720 und der Spannmutter 930 arretiert und gesichert wird. Eine Lagesicherung des Sicherungselements 910 selbst erfolgt mit einer weiteren Sicherungsschraube 970, die zentral über ein Gewinde in ein Innengewinde 770 des Radnabenadapters 720 nach der Montage des Sicherungselementes 910 eingeschraubt wird.

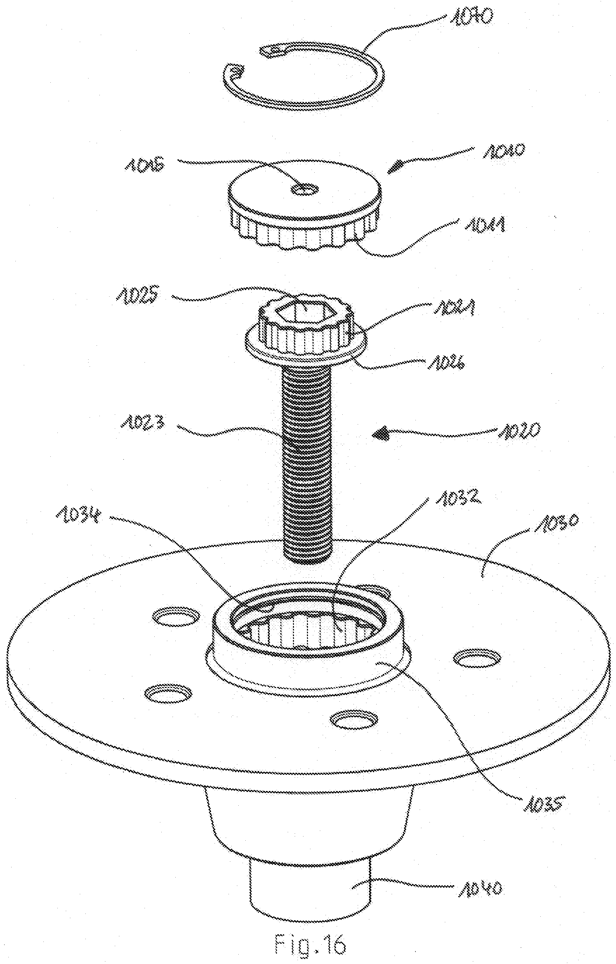

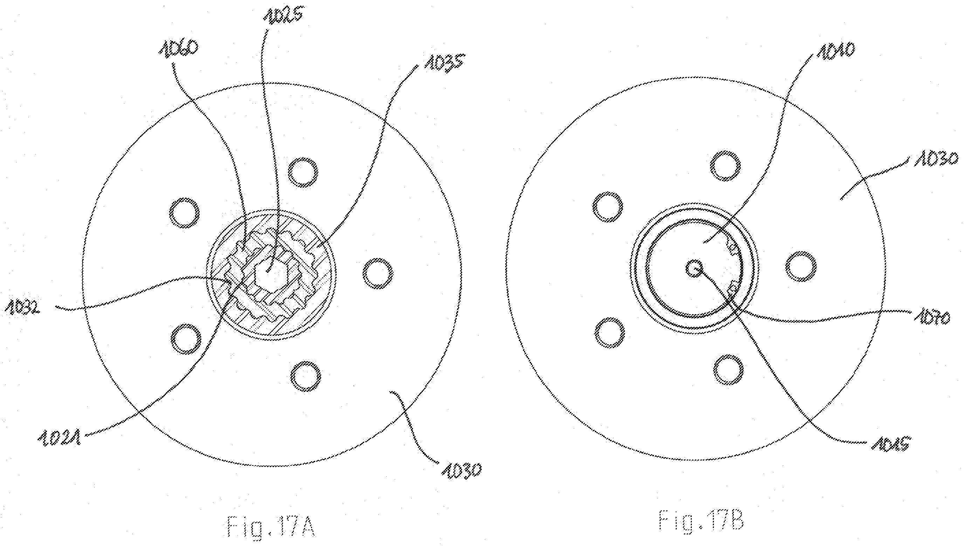

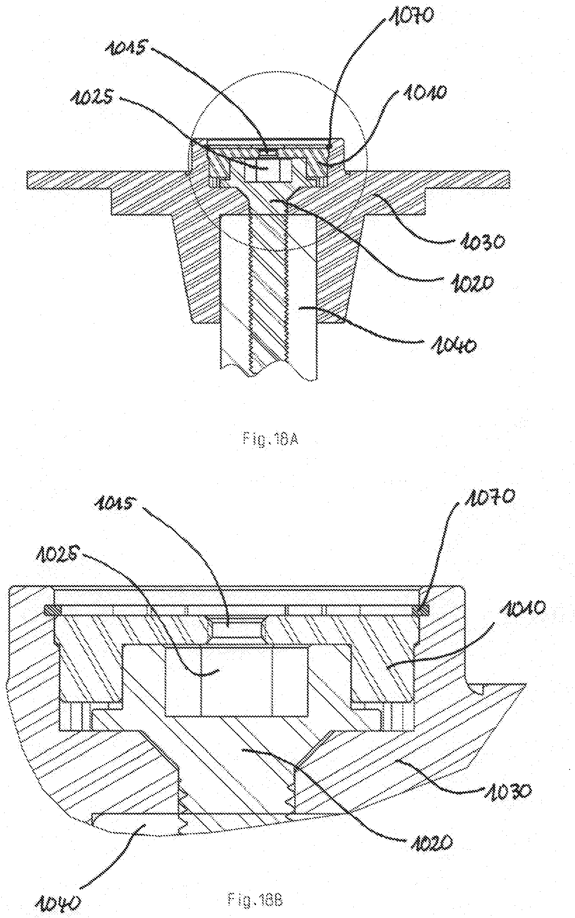

**Fig. 16** zeigt in einer Explosiv-Darstellung die Anwendung des erfindungsgemäßen Sicherungssystems für die Sicherung einer Schraube 1020, die ein erstes Bauteil im Sinne der oben eingeführten Definitionen darstellt. **Fig. 17A** und **Fig. 17B** zeigen Aufsichten auf das System und **Fig. 18A** und **Fig. 18B** (Vergrößerung) zeigen Schnittansichten dieses Systems. Die verschiedenen Elemente des erfindungsgemäßen Systems sind in den Fig. 16 - 18 mit den gleichen Bezugszeichen versehen. Die Schraube 1020 ist dazu vorgesehen, mittels des Außengewindes 1023 in ein nicht erkennbares Innengewinde einer zweiten Bauteilanordnung 1030, 1040 eingeschraubt zu werden. In diesem Beispiel handelt es sich bei der zweiten Bauteilanordnung um eine Radnabe, die von einem Flansch 1030 (Radscheibe) und einer Welle 1040 gebildet wird. Der Flansch 1030 kann beispielsweise mittels eines nicht näher dargestellten Vielzahnkranzes auf die Welle 1040 aufgesetzt werden. Die Welle 1040 ist mit dem Innengewinde ausgestattet, wobei der Flansch 1030 an der Welle mit der Schraube 1020 befestigt wird. Die Schraube 1020 mit dem Außengewinde 1023 wird durch den Flansch 1030 hindurch in das Innengewinde der Welle 40 eingesetzt. Diese Schraubverbindung wird mit dem erfindungsgemäßen Sicherungssystem arretiert und gesichert. Hierfür ist die Schraube 1020 in ihrem Kopfbereich mit einer endständig angeordneten, außen umlaufenden Profilierung 1021 ausgestattet. Diese außen umlaufende Profilierung 1021 bildet den endständigen, äußeren Umfang des Schraubenkopfes. Der Schraubenkopf weist zusätzlich einen Innensechskant 1025 auf, der zum Eingreifen eines Schraubwerkzeuges vorgesehen ist. Unterhalb des Bereiches mit der außen umlaufenden Profilierung 1021 ist eine kreisförmige Anschlagplatte 1026 vorgesehen, die den Schraubenkopf nach unten abschließt und die vom Umfang her den Bereich mit der außen umlaufenden Profilierung 1021 überragt. Der Flansch 1030 als Bestandteil der zweiten Bauteilanordnung 1030, 1040 weist einen endständigen, zentralen und hohlzylinderförmigen Bereich 1035 auf, der mit einer innen umlaufenden Profilierung 1032 gemäß dem erfindungsgemäßen Prinzip ausgestattet ist. Beim Einsetzen der Schraube 1020 in das Innengewinde der Welle 1040 und beim Versenken der Schraube 1020 in den Flansch 1030 bis zum Anschlag der Anschlagplatte 1026 bildet sich zwischen der innen umlaufenden Profilierung 1032 des Flansches 1040 und der außen umlaufenden Profilierung 1021 der Schraube 1020 ein Sicherungsspalt 1060 aus, der in der in Fig. 17A gezeigten Aufsicht auf das Sicherungssystem erkennbar ist. In den Sicherungsspalt 1060 wird das Sicherungselement 1010 eingesetzt, wobei die Anzahl der PFE der außen umlaufenden Profilierung 1011 und die Anzahl der PFE der in Fig. 16 nicht erkennbaren Innenprofilierung des Sicherungselements 1010 der Anzahl der PFE der innen umlaufenden Profilierung 1032 des Flansches 1030 bzw. der außen umlaufenden Profilierung 1021 der Schraube 1020 entsprechen. Erfindungsgemäß unterscheidet sich die Anzahl der PFE zwischen der Außenprofilierung 1011 und der Innenprofilierung des Sicherungselements 1010 um mindestens 1, in diesem Beispiel sind es 15 bzw. 16 Profilierungseinheiten. Zur Lagefixierung des Sicherungselements 1010 wird ein Nutring 1070 in eine umlaufende Nut 1034 im Innenbereich des zentralen, hohlzylinderförmigen Bereichs 1035 des Flansches 1030 eingesetzt. Fig. 17B zeigt den montierten Zustand des Systems in Aufsicht, wobei die Position des Nutrings 1070 erkennbar ist. Als Alternative zu dem Nutring 1070 kann beispielsweise eine Gewindering oder Ähnliches eingesetzt werden. Zur erleichterten Demontage des Sicherungselements 1010 kann das Sicherungselement 1010 ein Mittelloch 1015 mit einem Innengewinde aufweisen, das zum Ansetzen und zum Demontieren beispielsweise einer Gewindestange bzw. eines Schlaghammers geeignet ist.

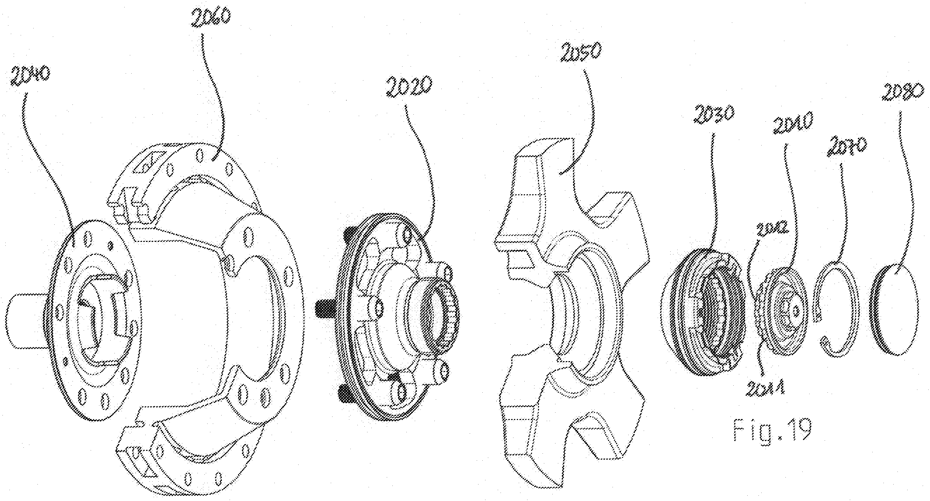

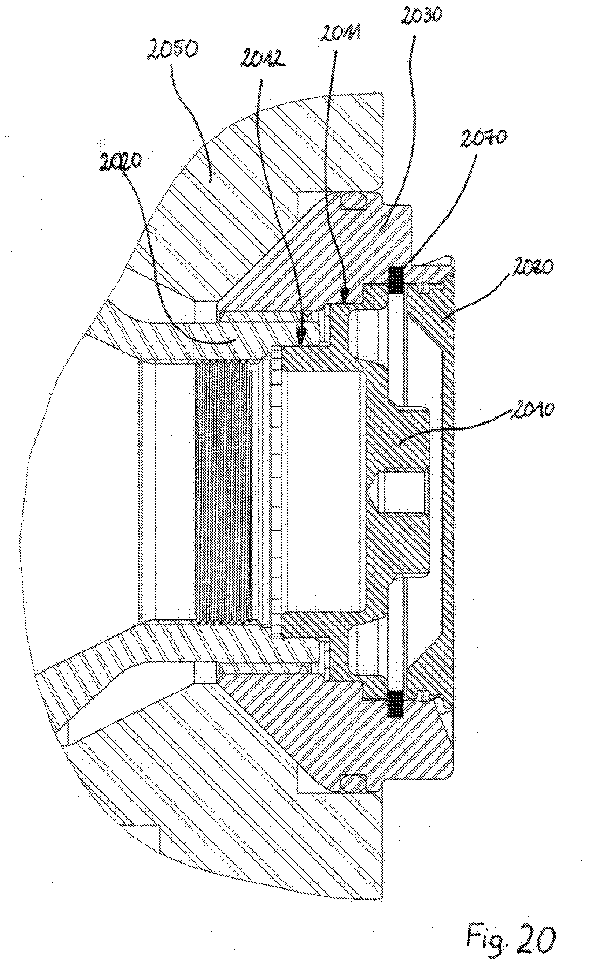

**Fig. 19** illustriert in einer Explosiv-Darstellung eine weitere Anwendung des erfindungsgemäßen Sicherungssystems für einen Zentralverschluss für ein Kraftfahrzeugrad. Die Darstellung zeigt von links nach rechts eine Radnabe 2040, einen Teil einer Bremsscheibe 2060, einen Radnabenadapter 2020 mit fünf Mitnahmebolzen, eine Felge 2050 (nur teilweise dargestellt), eine Spannmutter 2030, ein erfindungsgemäßes Sicherungselement 2010, einen Seegering 2070 und eine Abdeckplatte 2080. Das Sicherungselement 2010 ist in dieser Ausgestaltung so realisiert, dass die Außenprofilierung 2011 und die Innenprofilierung 2012 auf zwei unterschiedlichen Ebenen des Sicherungselements 2010, also gewissermaßen stufenförmig, angeordnet sind. Die Außenprofilierung 2011 verläuft dabei auf einem größeren Kreisumfang als die Innenprofilierung 2012. In entsprechender Weise befinden sich die gegengleichen Profilierungen bei der Spannmutter 2030 und bei dem Radnabenadapter 2020 (erstes bzw. zweites Bauteil) im zusammengesetzten Zustand dieser Bauteile ebenfalls auf zwei Ebenen, sodass das Sicherungselement 2010 entsprechend eingesetzt werden kann und die Verbindung zwischen der Spannmutter 2030 und dem Radnabenadapter 2020 arretiert. In dieser Ausgestaltung des erfindungsgemäßen Sicherungssystems bezieht sich die Position der außen bzw. innen umlaufenden Profilierungen des ersten und des zweiten Bauteils daher insbesondere auf die Position der Profilierungen im Hinblick auf deren konzentrische Ausrichtung im zusammengebauten Zustand der Bauteile. Vergleichbar mit der Ausgestaltung, die in Fig. 16 illustriert ist, kann das Sicherungselement 2010 selbst mit dem Seegering 2070 (Nutring) gesichert werden und der Radverschluss mit der Abdeckkappe 2080 abgeschlossen werden. **Fig. 20** zeigt eine Schnittdarstellung eines Ausschnitts dieses Sicherungssystems. Die Zeichnung ist mit den gleichen Bezugszeichen versehen.

## Patentansprüche

1. Sicherungselement (10; 110; 210; 910; 1010; 2010) für eine Verbindung von zwei Bauteilen, insbesondere für eine Schraubverbindung, wobei das Sicherungselement (10; 110; 210; 910; 1010) ringförmig ist und eine außen umlaufende Außenprofilierung (11; 111; 1011) und eine innen umlaufende Innenprofilierung (12; 112) aufweist, wobei die Außenprofilierung (11; 111; 1011) und die Innenprofilierung (12; 112) jeweils aus einer Mehrzahl von Profilierungseinheiten gebildet werden, **dadurch gekennzeichnet, dass** die Anzahl der Profilierungseinheiten der Außenprofilierung und die Anzahl der Profilierungseinheiten der Innenprofilierung der Anzahl von Teilstrichen bei unterschiedlichen Maßstäben gemäß dem Nonius-Prinzip entsprechen und wobei sich die Anzahl der Profilierungseinheiten der Außenprofilierung (11; 111; 1011) und die Anzahl der Profilierungseinheiten der Innenprofilierung (12; 112) um mindestens 1 unterscheiden und wobei sich an genau einer Position eine Profilierungseinheit der Außenprofilierung (11; 111; 1011) und eine Profilierungseinheit der Innenprofilierung (12; 112) genau gegenüber stehen.

2. Sicherungselement nach Anspruch 1, **dadurch gekennzeichnet, dass** die Anzahl der Profilierungseinheiten der Außenprofilierung (11; 111) niedriger ist als die Anzahl der Profilierungseinheiten der Innenprofilierung (12; 112) oder dass die Anzahl der Profilierungseinheiten der Außenprofilierung höher ist als die Anzahl der Profilierungseinheiten der Innenprofilierung.

3. Sicherungselement nach Anspruch 1 oder Anspruch 2, **dadurch gekennzeichnet, dass** die Profilierungseinheiten der Außenprofilierung (11; 111) und/oder der Innenprofilierung (12; 112) wellenförmig sind.

4. Sicherungselement nach einem der vorhergehenden Ansprüche, **dadurch gekennzeichnet, dass** die niedrigere Anzahl der Profilierungseinheiten mindestens 9 und die höhere Anzahl der Profilierungseinheiten mindestens 10 beträgt.

5. Sicherungselement nach einem der vorhergehenden Ansprüche, **dadurch gekennzeichnet, dass** sich die Anzahl der Profilierungseinheiten der Außenprofilierung (11; 111) und der Innenprofilierung (12; 112) um genau 1 unterscheiden.

6. Sicherungselement nach Anspruch 5, **dadurch gekennzeichnet, dass** die niedrigere Anzahl der Profilierungseinheiten 17 und die höhere Anzahl der Profilierungseinheiten 18 beträgt.

7. Sicherungselement (2010) nach einem der vorhergehenden Ansprüche, **dadurch gekennzeichnet, dass** die Außenprofilierung (2011) und die Innenprofilierung (2012) auf unterschiedlichen Ebenen des Sicherungselements (2010) umlaufen.

8. Sicherungselement (2010) für eine Verbindung von zwei Bauteilen, insbesondere für eine Schraubverbindung, wobei das Sicherungselement eine erste Profilierung (2011) und eine zweite Profilierung (2012) aufweist, die jeweils auf unterschiedlichen Kreisumfängen auf unterschiedlichen Ebenen des Sicherungselements umlaufen, wobei die erste Profilierung (2011) und die zweite Profilierung (2012) jeweils aus einer Mehrzahl von Profilierungseinheiten gebildet werden und wobei die Anzahl der Profilierungseinheiten der ersten Profilierung (2011) und die Anzahl der Profilierungseinheiten der zweiten Profilierung (2012) der Anzahl von Teilstrichen bei unterschiedlichen Maßstäben gemäß dem Nonius-Prinzip entsprechen und wobei sich die Anzahl der Profilierungseinheiten der ersten Profilierung (2011) und die Anzahl der Profilierungseinheiten der zweiten Profilierung (2012) um mindestens 1 unterscheiden und wobei sich an genau einer Position eine Profilierungseinheit der ersten Profilierung (2011) und eine Profilierungseinheit der zweiten Profilierung (2012) genau gegenüber stehen.

9. Sicherungssystem (500; 900) für eine Verbindung von einem ersten Bauteil (20; 120; 220; 720; 1020; 2020) oder einer ersten Bauteilanordnung und einem zweiten Bauteil (30; 130; 230; 930; 2030) oder einer zweiten Bauteilanordnung, wobei das erste Bauteil (20; 120; 220; 720; 1020; 2020) oder die erste Bauteilanordnung einen Bereich mit einer außen umlaufenden Profilierung (21; 121; 221; 721; 1021) aufweist, und wobei das zweite Bauteil (30; 130; 230; 930; 2030) oder die zweite Bauteilanordnung (1030, 1040) einen Bereich mit einer innen umlaufenden Profilierung (32; 132; 232; 932; 1032) aufweist, und wobei im verbundenen Zustand der Bauteile zwischen der Profilierung (21; 121; 221; 721; 1021) des ersten Bauteils (20; 120; 220; 720; 1020; 2020) oder der ersten Bauteilanordnung und der Profilierung (32; 132; 232; 932; 1032) des zweiten Bauteils (30; 130; 230; 930; 2030) oder der zweiten Bauteilanordnung (1030, 1040) ein ringförmiger Sicherungsspalt (160; 260; 1060) gebildet wird, weiter umfassend ein Sicherungselement (10; 110; 210; 910; 1010; 2010) gemäß einem der Ansprüche 1 bis 8 zur Anordnung in dem Sicherungsspalt (160; 260; 1060).

10. Sicherungssystem nach Anspruch 9, **dadurch gekennzeichnet, dass** die Verbindung eine Schraubverbindung ist, wobei das erste Bauteil (20; 120; 220; 720; 1020; 2020) oder die erste Bauteilanordnung ein ersten Gewinde (23; 123; 223; 723; 1023) und das zweite Bauteil (30; 130; 230; 930; 2030) oder die zweite Bauteilanordnung (1030, 1040) ein zweites Gewinde (33) aufweisen, und wobei im zusammengeschraubten Zustand der Bauteile zwischen der Profilierung (21; 121; 221; 721; 1021) des ersten Bauteils (20; 120; 220; 720; 1020; 2020) oder der ersten Bauteilanordnung und der Profilierung (32; 132; 232; 932; 1032) des zweiten Bauteils (30; 130; 230; 930; 2030) oder der zweiten Bauteilanordnung (1030, 1040) der ringförmige Sicherungsspalt (160; 260; 1060) zum Einsetzen des Sicherungselements (10; 110; 210; 910; 1010; 2010) gebildet wird.

11. Sicherungssystem nach Anspruch 9 oder Anspruch 10, **dadurch gekennzeichnet, dass** die außen umlaufende Profilierung (21; 121; 221; 721; 1021) des ersten Bauteils (20; 120; 220; 720; 1020) oder der ersten Bauteilanordnung eine Anzahl von Profilierungseinheiten aufweist, die der Anzahl der Profilierungseinheiten der Innenprofilierung (12; 112) des Sicherungselementes (10; 110; 210; 910; 1010) entspricht, wobei die außen umlaufende Profilierung des ersten Bauteils oder der ersten Bauteilanordnung gegengleich zur Innenprofilierung des Sicherungselementes ist.

12. Sicherungssystem nach einem der Ansprüche 9 bis 11, **dadurch gekennzeichnet, dass** die innen umlaufende Profilierung (32; 132; 232; 932; 1032) des zweiten Bauteils (30; 130; 230; 930) oder der zweiten Bauteilanordnung (1030, 1040) eine Anzahl von Profilierungseinheiten aufweist, die der Anzahl der Profilierungseinheiten der Außenprofilierung (11; 111; 1011) des Sicherungselementes (10; 110; 210; 910; 1010) entspricht, wobei die innen umlaufende Profilierung des zweiten Bauteils oder der zweiten Bauteilanordnung gegengleich zur Außenprofilierung des Sicherungselementes ist.

13. Sicherungssystem nach einem der Ansprüche 9 bis 12, **dadurch gekennzeichnet, dass** das Sicherungssystem weiterhin wenigstens ein Mittel (25, 70; 124, 170; 224, 270; 970; 1070) zur Sicherung des Sicherungselementes (10; 110; 210; 910; 1010) umfasst.

14. Verwendung eines Sicherungssystems (500; 900) gemäß einem der Ansprüche 9 bis 13 zur Sicherung einer Schraubverbindung zur Befestigung eines für eine rotierende Bewegung vorgesehen Bauteils (150; 250; 950), insbesondere zur Sicherung eines Zentralverschlusses für ein Rad bei einem Fahrzeug.

## Claims

1. Securing element (10; 110; 210; 910; 1010; 2010) for connecting two components, in particular for a screw connection, wherein the securing element (10; 110, 210; 910; 1010) is ring-shaped and has an outer profile (11; 111; 1011) along the outer circumference and an inner profile (12; 112) along the inner circumference, wherein the outer profile (11; 111; 1011) and the inner profile (12; 112) are each formed from a plurality of profile units, **characterised in that** the number of profile units of the outer profile and the number of the profile units of the inner profile correspond to the number of graduation marks with different scales according to the Vernier principle and wherein the number of profile units of the outer profile (11; 111; 1011) and the number of profile units of the inner profile (12; 112) differ by at least 1, and wherein a profile unit of the outer profile (11; 111; 1011) and a profile unit of the inner profile (12; 112) are precisely opposite each other in precisely one position.

2. Securing element according to claim 1, **characterised in that** the number of profile units of the outer profile (11; 111) is lower that the number of profile units of the inner profile (12; 112) or the number of profile units of the outer profile is higher than the number of profile units of the inner profile.

3. Securing element according to claim 1 or claim 2, **characterised in that** the profile units of the outer profile (11; 111) and/or the inner profile (12; 112) are shaped as waves.

4. Securing element according to one of the preceding claims, **characterised in that** the lower number of profile units is at least 9 and the higher number of profile units is at least 10.

5. Securing element according to one of the preceding claims, **characterised in that** the number of profile units of the outer profile (11; 111) and the inner profile (12; 112) differs by precisely 1.

6. Securing element according to claim 5, **characterised in that** the lower number of the profile units is 17 and the higher number of the profile units is 18.

7. Securing element (2010) according to one of the preceding claims, **characterised in that** the outer profile (2011) and the inner profile (2012) run around on different levels of the securing element (2010).

8. Securing element (2010) for connecting two components, in particular for a screw connection, wherein the securing element has a first profile (2011) and a second profile (2012) that each run around on different circumferences on different levels of the securing element, wherein the first profile (2011) and the second profile (2012) are each formed from a plurality of profile units and wherein the number of profile units of the first profile (2011) and the number of profile units of the second profile (2012) correspond to the number of graduation marks with different scales according to the Vernier principle and wherein the number of profile units of the first profile (2011) and the number of profile units of the second profile (2012) differ by at least 1 and wherein a profile unit of the first profile (2011) and a profile unit of the second profile (2012) are precisely opposite each other in precisely one position.

9. Securing system (500; 900) for connecting a first component (20; 120; 220; 720; 1020; 2020) or a first component arrangement and a second component (30; 130; 230; 930; 2030) or a second component arrangement, wherein the first component (20; 120; 220; 720; 1020; 2020) or the first component arrangement has a region having a profile along the outer circumference (21; 121; 221; 721; 1021), and wherein the second component (30; 130; 230; 930; 2030) or the second component arrangement (1030, 1040) has a region having an profile along the inner circumference (32; 132; 232; 932; 1032), and wherein, in the connected state of the components, a ring-shaped gap (160; 260; 1060) is formed between the profile (21; 121; 221; 721; 1021) of the first component (20; 120; 220; 720; 1020; 2020) or the first component arrangement and the profile (32; 132; 232; 932; 1032) of the second component (30; 130; 230; 930; 2030) or the second component arrangement (1030, 1040), further comprising a securing element (10; 110; 210; 910; 1010; 2010) according to one of claims 1 to 8 for arrangement in the securing gap (160; 260; 1060).

10. Securing system according to claim 9, **characterised in that** the connection is a screw connection, wherein the first component (20; 120; 220; 720; 1020; 2020) or the first component arrangement has a first thread (23; 123; 223; 723; 1023) and the second component (30; 130; 230; 930; 2030) or the second component arrangement (1030, 1040) has a second thread (33), and wherein, in the screwed-together state of the component, the ring-shaped securing gap (160; 260; 1060) is formed between the profile (21; 121; 221; 721; 1021) of the first component (20; 120; 220; 720; 1020; 2020) or the first component arrangement and the profile (32; 132; 232; 932; 1032) of the second component (30; 130; 230; 930; 2030) or the second component arrangement (1030, 1040) for inserting the securing element (10; 110; 210; 910; 1010; 2010).

11. Securing system according to claim 9 or claim 10, **characterised in that** the profile along the outer circumference (21; 121; 221; 721; 1021) of the first component (20; 120; 220; 720; 1020) or the first component arrangement has a number of profile units that corresponds to the number of the profile units of the inner profile (12; 112) of the securing element (10; 110; 210; 910; 1010), wherein the profile along the outer circumference of the first component or the first component arrangement is mirror-inverted relative to the inner profile of the securing element.

12. Securing system according to one of claims 9 to 11, **characterised in that** the profile (32; 132; 232; 932; 1032) along the inner circumference of the second component (30; 130; 230; 930) or the second component arrangement (1030, 1040) has a number of profile units that corresponds to the number of profile units of the outer profile (11; 111; 1011) of the securing element (10; 110; 210; 910; 1010), wherein the profile along the inner circumference of the second component or the second component arrangement is mirror-inverted relative to the outer profile of the securing element.

13. Securing system according to one of claims 9 to 12, **characterised in that** the securing system further comprises at least one means (25, 70; 124, 170; 224, 270; 970; 1070) for securing the securing element (10; 110; 210; 910; 1010).

14. Use of a securing system (500; 900) according to one of claims 9 to 13 for securing a screw connection for fixing a component (150; 250; 950) provided for a rotating movement, in particular for securing a central lock for a wheel in a motor vehicle.

## Revendications

1. Élément de fixation (10 ; 110 ; 210 ; 910 ; 1010 ; 2010) destiné à un raccordement de deux éléments de construction, en particulier destiné à un raccord vissé, l'élément de fixation (10 ; 110 ; 210 ; 910 ; 1010 ; 2010) étant annulaire et présentant un profilage extérieur circonférentiel extérieur (11 ; 111 ; 1011) et un profilage intérieur circonférentiel intérieur (12 ; 112), le profilage extérieur (11 ; 111 ; 1011) et le profilage intérieur (12 ; 112) étant chacun formés d'une pluralité d'unités de profilage, **caractérisé en ce que** le nombre d'unités de profilage du profilage extérieur et le nombre d'unités de profilage du profilage intérieur correspondent au nombre de graduations selon différents critères conformément au principe de vernier et le nombre d'unités de profilage du profilage extérieur (11 ; 111 ; 1011) et le nombre d'unités de profilage du profilage intérieur (12 ; 112) se différenciant au moins de 1 et une unité de profilage du profilage extérieur (11 ; 111 ; 1011) et une unité de profilage du profilage intérieur (12 ; 112) se faisant exactement face dans précisément une position.

2. Élément de fixation selon la revendication 1, **caractérisé en ce que** le nombre d'unités de profilage du profilage extérieur (11 ; 111) est inférieur au nombre d'unités de profilage du profilage intérieur (12 ; 112) ou **en ce que** le nombre d'unités de profilage du profilage extérieur est supérieur au nombre d'unités de profilage du profilage intérieur.

3. Élément de fixation selon la revendication 1 ou la revendication 2, **caractérisé en ce que** les unités de profilage du profilage extérieur (11 ; 111) et/ou du profilage intérieur (12 ; 112) sont sous forme ondulée.

4. Élément de fixation selon l'une des revendications précédentes, **caractérisé en ce que** le nombre inférieur d'unités de profilage s'élève à au moins 9 et le nombre supérieur d'unités de profilage s'élève à au moins 10.

5. Élément de fixation selon l'une des revendications précédentes, **caractérisé en ce que** le nombre d'unités de profilage du profilage extérieur (11 ; 111) et du profilage intérieur (12 ; 112) se différencient de 1 exactement.

6. Élément de fixation selon la revendication 5, **caractérisé en ce que** le nombre inférieur d'unités de profilage s'élève à 17 et le nombre supérieur d'unités de profilage s'élève à 18.

7. Élément de fixation (2010) selon l'une des revendications précédentes, **caractérisé en ce que** le profilage extérieur (2011) et le profilage intérieur (2012) circulent à des niveaux différents de l'élément de fixation (2010).

8. Élément de fixation (2010) destiné à un raccordement de deux éléments de construction, en particulier à un raccord vissé, l'élément de fixation présentant un premier profilage (2011) et un deuxième profilage (2012), chacun circulant sur des périphéries différentes à des niveaux différents de l'élément de fixation, le premier profilage (2011) et le deuxième profilage (2012) étant chacun formés d'une pluralité d'unités de profilage et le nombre d'unités de profilage du premier profilage (2011) et le nombre d'unités de profilage du deuxième profilage (2012) correspondant au nombre de graduations selon différents critères conformément au principe de vernier et le nombre d'unités de profilage du premier profilage (2011) et le nombre d'unités de profilage du deuxième profilage (2012) se différenciant au moins de 1 et une unité de profilage du premier profilage (2011) et une unité de profilage du deuxième profilage (2012) se faisant exactement face dans précisément une position.

9. Système de fixation (500 ; 900) destiné à un raccordement d'un premier élément de construction (20 ; 120 ; 220 ; 720 ; 1020 ; 2020) ou d'un premier ensemble d'éléments de construction et d'un deuxième élément de construction (30 ; 130 ; 230 ; 930 ; 2030) ou d'un deuxième ensemble d'éléments de construction, le premier élément de construction (20 ; 120 ; 220 ; 720 ; 1020 ; 2020) ou le premier ensemble d'éléments de construction comportant une zone comprenant un profilage circonférentiel extérieur (21 ; 121 ; 221 ; 721 ; 1021), et le deuxième élément de construction (30 ; 130 ; 230 ; 930 ; 2030) ou le deuxième ensemble d'éléments de construction (1030, 1040) comportant une zone comprenant un profilage circonférentiel intérieur (32 ; 132 ; 232 ; 932 ; 1032), et en état assemblé des éléments de construction, un interstice de sécurité (160 ; 260 ; 1060) annulaire est formé entre le profilage (21 ; 121 ; 221 ; 721 ; 1021) du premier élément de construction (20 ; 120 ; 220 ; 720 ; 1020 ; 2020) ou du premier ensemble d'éléments de construction et le profilage (32 ; 132 ; 232 ; 932 ; 1032) du deuxième élément de construction (30 ; 130 ; 230 ; 930 ; 2030) ou du deuxième ensemble d'éléments de construction (1030, 1040), comprenant en outre un élément de fixation (10 ; 110 ; 210 ; 910 ; 1010 ; 2010) conformément à l'une des revendications 1 à 8 en vue de l'agencement dans l'interstice de sécurité (160 ; 260 ; 1060).

10. Système de fixation selon la revendication 9, **caractérisé en ce que** le raccordement est un raccord vissé, le premier élément de construction (20 ; 120 ; 220 ; 720 ; 1020 ; 2020) ou le premier ensemble de éléments de construction présentant un premier filetage (23 ; 123 ; 223 ; 723 ; 1023) et le deuxième élément de construction (30 ; 130 ; 230 ; 930 ; 2030) ou le deuxième ensemble de éléments de construction (1030, 1040) présentant un deuxième filetage (33), et dans l'état où les éléments de construction sont vissés ensemble, l'interstice de sécurité (160 ; 260 ; 1060) annulaire est formé entre le profilage (21 ; 121 ; 221 ; 721 ; 1021) du premier élément de construction (20 ; 120 ; 220 ; 720 ; 1020 ; 2020) ou du premier ensemble d'éléments de construction et le profilage (32 ; 132 ; 232 ; 932 ; 1032) du deuxième élément de construction (30 ; 130 ; 230 ; 930 ; 2030) ou du deuxième ensemble d'éléments de construction (1030, 1040) en vue de la mise en place de l'élément de fixation (10; 110 ; 210 ; 910 ; 1010; 2010).

11. Système de fixation selon la revendication 9 ou la revendication 10, **caractérisé en ce que** le profilage circonférentiel extérieur (21 ; 121 ; 221 ; 721 ; 1021) du premier élément de construction (20 ; 120 ; 220 ; 720 ; 1020) ou du premier ensemble d'éléments de construction présente un nombre d'unités de profilage qui correspond au nombre d'unités de profilage du profilage intérieur (12 ; 112) de l'élément de fixation (10 , 110 ; 210 ; 910 ; 1010), le profilage circonférentiel extérieur du premier élément de construction ou du premier ensemble d'éléments de construction est diamétralement opposé au profilage intérieur de l'élément de fixation.

12. Système de fixation selon l'une des revendications 9 à 11, **caractérisé en ce que** le profilage circonférentiel intérieur (32 ; 132 ; 232 ; 932 ; 1032) du deuxième élément de construction (30 ; 130 ; 230 ; 930) ou du deuxième ensemble d'éléments de construction (1030, 1040) présente un nombre d'unités de profilage qui correspond au nombre d'unités de profilage du profilage extérieur (11 ; 111 ; 1011) de l'élément de fixation (10 ; 110 ; 210 ; 910 ; 1010), le profilage circonférentiel intérieur du deuxième élément de construction ou du deuxième ensemble d'éléments de construction est diamétralement opposé au profilage extérieur de l'élément de fixation.

13. Système de fixation selon l'une des revendications 9 à 12, **caractérisé en ce que** le système de fixation comprend en outre au moins un moyen (25 ; 70 ; 124 ; 170 ; 224 ; 270 ; 970 ; 1070) en vue de la fixation de l'élément de fixation (10 ; 110 ; 210 ; 910 ; 1010).

14. Utilisation d'un système de fixation (500 ; 900) conformément à l'une des revendications 9 à 13 destinée à la fixation d'un raccord vissé pour la fixation d'un élément de construction (150 ; 250 ; 950) prévu pour un mouvement de rotation, en particulier destinée à la fixation d'une fermeture centrale pour une roue dans un véhicule.
